(19) **Europäisches Patentamt / European Patent Office / Office européen des brevets**

(11) **EP 2 501 055 B1**

(12) **EUROPEAN PATENT SPECIFICATION**

(45) Date of publication and mention
of the grant of the patent:
**25.09.2013 Bulletin 2013/39**

(51) Int Cl.:
*H04B 17/00* (2006.01)    *H04B 7/08* (2006.01)
*H04B 7/06* (2006.01)    *H04B 7/02* (2006.01)

(21) Application number: **11305302.9**

(22) Date of filing: **17.03.2011**

(54) **Data signal detection in Cooperative Multi-Point using channel submatrix decomposition.**

Konzept zur Bereitstellung von Datendetektionsinformationen

Concept pour fournir des informations de détection de données

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.09.2012 Bulletin 2012/38**

(73) Proprietor: **Alcatel Lucent
75007 Paris (FR)**

(72) Inventors:
• **Chen, Yejian
70191, Stuttgart (DE)**

• **Ten Brink, Stephan
70469, Stuttgart (DE)**

(74) Representative: **Wetzel, Emmanuelle
Alcatel Lucent
Intellectual Property & Standards
70430 Stuttgart (DE)**

(56) References cited:
**WO-A1-02/03568        WO-A1-2006/088400
WO-A1-2009/095744    US-A1- 2004 266 339
US-A1- 2006 109 891    US-A1- 2009 103 641
US-A1- 2009 323 545    US-A1- 2009 323 840
US-A1- 2010 255 790**

**Description**

The present invention relates to data signal detection in received radio signals, more particularly but not exclusively to data signal detection in a multiple- input- multiple- output (abbreviated as MIMO) system.

Background

Multiple- Input Multiple- Output (MIMO) antenna techniques can significantly increase the data rates by exploiting spatial multiplexing, and/or achieve additional diversity gains by applying space- time coding, cf. Foschini, G. J. and Gans, M. J.; "On limits of wireless comunications in a fading environment when using multiple antennas, " Wireless Personal Communications, vol. 6, no. 3, pp. 311- 335, Mar. 1998; Telatar, I. E.; "Capacity of multi- antenna Gaussian channels, " European Transactions on Telecommunications, vol. 10, no. 6, pp. 585- 595, Nov. 1999; Alamouti, S. M.; "A simple transmit diversity technique for wireless communications, " IEEE Journal on Selected Areas in Communications, vol. 16, no. 8, pp. 1451- 1458, Oct. 1998. Nevertheless, with the ever increasing demands for higher data throughput and higher spectral efficiency, new system requirements have been defined for the 4- th Generation (4G as abbreviation) and Beyond 4G (B4G as abbreviation) wireless networks. Thus, new key technologies need to be taken into account.

For example, in Boudreau, G.; Panicker, J.; Ning Guo; Rui Chang; Neng Wang; Vrzic, S.; "Interference Coordination and Cancellation for 4G Networks," IEEE Communications Magazine, vol.47, no.4, pp.74-81, Apr. 2009, the authors show that interference coordination in 4G networks can be achieved by a combination of physical layer techniques such as Inter-Cell Interference Cancellation (ICIC), MIMO, Spatial Division Multiple Access (SDMA), adaptive beamforming, sphere decoding, cf. Larsson, E.G.; "MIMO Detection Methods: How They Work," IEEE Signal Processing Magazine, vol.26, no.3, pp.91-95, May 2009, Windpassinger, C.; Lampe, L.; Fischer, R.F.H.; Hehn, T.; "A performance study of MIMO detectors," IEEE Transactions on Wireless Communications, vol.5, no.8, pp.2004-2008, Aug. 2006, Hochwald, B.M.; ten Brink, S.; "Achieving Near-Capacity on a Multiple-Antenna Channel," IEEE Transactions on Communications, vol.51, no.3, pp.389-399, Mar. 2003. Other concepts are network MIMO, cf. Foschini, G.J.; Karakayali, K.; Valenzuela, R.A.; "Coordinating multiple antenna cellular networks to achieve enormous spectral efficiency," IEE Proceedings Communications, vol.153, pp.548-555, Aug. 2006, Huang, H.; Trivellato, M.; Hottinen, A.; Shafi, M.; Smith, P.; Valenzuela, R.; "Increasing downlink cellular throughput with limited network MIMO coordination," IEEE Transactions on Wireless Communications, vol.8, no.6, pp.2983-2989, Jun. 2009, and Coordinated Multi-Point transmission and reception (abbreviated as CoMP).

Obviously, the challenges for high data throughput, high spectral efficiency, and better coverage have created new interest in large MIMO systems, with possibly distributed antenna techniques Mohammed, S.K.; Zaki, A.; Chockalingam, A.; Rajan, B.S.; "High- Rate Space- Time Coded Large- MIMO Systems: Low- Complexity Detection and Channel Estimation, " IEEE Journal of Selected Topics in Signal Processing, vol. 3, no. 6, pp. 958- 974, Dec. 2009, and thus refined considerations regarding the performance/ complexity trade- off. On the other hand, thanks to technology and silicon integration advances, larger antenna array configurations with power and cost efficient detection algorithms are becoming feasible.

Linear MIMO detection algorithms, i.e. Zero- Forcing (abbreviated as ZF), or Minimum Mean Square Error (abbreviated as MMSE), are well known for their low computational complexity, cf. McKay, M.R.; Collings, I.B.; "Capacity and Performance of MIMO- BICM With Zero- Forcing Receivers, " IEEE Transactions on Communications, vol. 53, no. 1, pp. 74- 83, Jan. 2005, Seethaler, D.; Matz, G.; Hlawatsch, F.; "An Efficient MMSE- Based Demodulator for MIMO Bit-Interleaved Coded Modulation, " in Proceedings of IEEE Global Telecommunications Conference 2004 (GLOBECOM'04), pp. 2455- 2459, Nov.- Dec. 2004. Linear detection algorithms may have low computational requirements. Nevertheless, the diversity order will decrease, if the number of transmission signal streams increases. In practice the MMSE algorithm suffers from noise estimation errors and serious degradation under block fading channel conditions, and ZF algorithms have to combat against noise amplification and the ill- conditioned channel matrix, if $M_R \leq M_T$ holds, where $M_R$ and $M_T$ denote the number of receive and transmit antennas, respectively.

Maximum Likelihood Detection (abbreviated as MLD), or Maximum a posteriori Probability (abbreviated as APP) detection in the context of soft channel decoding, may deliver the upper bound performance. Nevertheless, its high computational complexity often cannot be afforded within MIMO systems with larger antenna configurations, in the following also referred to as massive MIMO systems. Sphere decoding provides another successful detection strategy to reduce the number of signal candidates, cf. the above references. Generally, it is an effective solution to approach the APP upper bound performance. However, the search depth of sphere detection may significantly vary with respect to different channel realizations, posing a challenge to hardware implementation.

In Ariyavisitakul, S.L.; Jun Zheng; Ojard, E.; Joonsuk Kim; "Subspace Beamforming for Near-Capacity MIMO Performance," IEEE Transactions on Signal Processing, vol.56, no.11, pp.5729-5733, Nov. 2008, a subspace beamforming method is presented, in which the MIMO channel matrix is block-wise diagonalized by certain matrix decomposition approaches, limiting the number of jointly detected data streams to two.

Moreover, downlink transmission is normally restricted by the limitation of the receive antenna elements at the User Equipment (UE). The computational requirements and a loss of diversity, due to limited antenna spacing on UE, are two critical issues. MIMO relay networks are another hot topic. However, in practice, the relay network has to combat against the forward or feedback error, and transmission delay.

Document US 2004/0266339 A1 relates to wireless networks using cooperative relaying, in which a communication session involves more than one relay station. In the method according to the proposal, a transmitter, a receiver and at least one relay station are engaged in a communication session. The relay station forwards signals from a first link between the transmitter and the relay station to a second link between the relay station and the receiver. The relay station forwards the signal with the use of a relative transmission parameter and optionally a common transmission parameter. The relative transmission parameter is determined locally in each relay station and based on a characterization of the first link, or the second link or a combination of the first and second links.

Document WO 2006/088400 AI provides a method for relaying deployment in a wireless communication system comprising a transmitting node with multiple antennas for communicating with at least one receiving node via at least two relay nodes, a data stream at the transmitting node is partitioned into at least two data substreams, each of which is beamformed and transmitted over a first link to a respective of the relay nodes. Subsequently at least one restorable representation of each received substream is forwarded over a second link to the receiving node from the two relay nodes. Finally the received and decoded representations are multiplexed to form an output signal at the receiving node corresponding to the original data stream.

In document US 2009/0323545 a MIMO communication system having a terminal and a base station is disclosed. The terminal may calculate channel direction information and channel quality information in a zero-forcing mode based on expected different user interference. The terminal may also calculate channel direction information and channel quality information in a per user unitary rate control (PU2RC) mode by reusing the channel direction information and the channel quality information in the zero-forcing mode. The base station may design a preceding vector based on feedback information from the terminal.

Document US2009/0323840 describes a method of transmitting a codebook index in a wireless communication system includes receiving a feedback index regarding an entity selected from a plurality of entities belonging to a feedback codebook, selecting a precoder from a precoding codebook using the feedback index, the precoding codebook comprising a plurality of precoders and transmitting a precoder index of the selected precoder. Flexibility can be given to codebook designs, and overhead due to the feedback of codebook indices can be reduced.

Summary

Embodiments can be based on the finding that single user MIMO can increase the downlink throughput but is limited due to the limited number of independent signal copies, which can be obtained at a user equipment. The computational requirements are, in addition to the limited diversity due to limited antenna spacing on UE, other critical issues.

Embodiments may therefore further be based on the finding that receive signals of multiple mobile transceivers can be used to overcome the loss of diversity and that mobile transceivers may exploit other receive signals from the same base station but received by other mobile transceivers to further exploit the downlink capacity in a mobile communication system. Embodiments may enable mobile transceivers, which may not be able to exploit massive MIMO alone to cooperate and therewith enable a larger MIMO system having a higher capacity than the sum capacity of the individual downlink capacities. In other words, embodiments may enable the exploitation of received signals of multiple mobile transceivers and therewith establish a MIMO system. In some embodiments an apparatus may communicate with multiple mobile transceivers, receive multiple receive signal vectors from the multiple mobile transceivers and therewith exploit the multiple receive signals as MIMO system. In other embodiments such apparatus may be comprised in a mobile transceiver station.

Embodiments provide an apparatus for providing first data detection information on a first data signal of a first mobile transceiver and second data detection information on a second data signal of a second mobile transceiver as defined by the independent claims. The apparatus comprises means for communicating with the first mobile transceiver and for receiving a first receive signal vector from the first mobile transceiver, the first receive signal having been received from a base station transceiver by the first mobile transceiver. The apparatus further comprises means for communicating with the second mobile transceiver and for receiving a second receive signal vector from the second transceiver, the second receive signal having been received from the base station transceiver by the second mobile transceiver.

The apparatus may further comprise means for determining the data detection information on the first data signal and data detection information on the second data signal based on the first receive signal vector and the second receive signal vector. Also, the apparatus may comprise means for providing the data detection information on the first data signal to the first mobile transceiver and for providing the data detection information on the second data signal to the second mobile transceiver. The data detection information may correspond to reliability information on the first or second data signal, for example, information on a probability of the data as a Log-Likelihood-Ratio, information on the detected data itself, etc. In other embodiments the data detection information may correspond to any information, which helps or assists a mobile transceiver to detect its data signal. For example, a modified receive signal together with a modified channel estimate may be provided as data detection information, where the modified quantities may enable the mobile transceiver to more reliably detect its data signal. In other words, the apparatus may provide a modified received signal and a modified channel estimate to a mobile transceiver as data detection information, in which interference may be reduced compared to the mobile transceiver's original receive signal and original channel estimate.

In embodiments the means for determining can be adapted for determining a first estimated radio channel between the first mobile transceiver and the base station transceiver and for determining a second estimated radio channel between the second mobile transceiver and the base station transceiver. The means for determining can be further adapted for determining the data detection information corresponding to the first data signal and the data detection information corresponding to the second data signal based on the information on the first estimated radio channel and the information on the second estimated radio channel.

The means for communicating with the first mobile transceiver can be further adapted for receiving information on the first estimated radio channel between the first mobile transceiver and the base station transceiver from the first mobile transceiver and the means for communicating with the second mobile transceiver can be adapted for receiving information on the second estimated radio channel between the second mobile transceiver and the base station transceiver from the second mobile transceiver.

The first estimated radio channel may refer to a multiple- input- multiple- output radio channel between a plurality of transmit antennas at the base station transceiver and a plurality of receive antennas at the first mobile transceiver. The information on the second estimated radio channel may refer to a multiple- input- multiple- output radio channel between the plurality of transmit antennas at the base station transceiver and a plurality of receive antennas at the second mobile station transceiver.

The first receive signal vector may refer to a plurality of receive signals received at a plurality of receive antennas at the first mobile transceiver, and the second receive signal vector may refer to a plurality of receive signals received at a plurality of receive antennas at the second mobile transceiver. In other words, the apparatus may form a MIMO system on a larger scale based on individual MIMO systems established by the individual mobile transceiver stations.

The means for determining can be adapted for determining the first radio channel estimate as a first radio channel matrix and the second radio channel estimate as a second radio channel matrix. The means for determining can be further adapted for determining a radio channel matrix between the plurality of transmit antennas at the base station and the plurality of receive antennas at the first and the second mobile transceiver, the radio channel matrix having at least one channel coefficient for each combination of one of the plurality of transmit antennas at the base station transceiver and one of the plurality of receive antennas at the first and second mobile transceiver. Hence, the MIMO system formed by the apparatus may correspond to a MIMO system between the base station transceiver and all receive antennas of all considered mobile transceivers.

The means for determining can be further adapted for determining subsets of data signals, and for determining one sub-matrix for each subset of data signals, wherein each of the data signals is comprised in at least one of the subsets. The means for determining can further comprise means for generating modified received signals for each subset, means for calculating data detection information for each data signal in each subset. The means for determining can be further adapted for determining the data detection information on the first and second data signal based on the data detection information for each data signal in each subset.

The means for determining can be adapted for determining the subsets by determining quality information on the first and second data signal based on the plurality of receive signal vectors and the channel matrix, a sub-matrix being based on a subset of coefficients selected from the channel matrix based on the quality information.

A sub-matrix can be a triangular matrix based on a reordering operation on the channel matrix and based on the quality information and a subsequent decomposition of the channel matrix. A sub-matrix can be a sub-matrix of a triangular matrix resulting from the decomposition of the reordered channel matrix according to reordering operations, where a reordering operation can be different for each subset. The reordering may correspond to a selection of a subset of transmit signals, the subset of transmit signals being selected based on the quality information, where in a first reordering operation transmit signals are selected among which the quality information indicates the best quality for the first data signal, and where in a second reordering operation transmit signals are selected among which the quality information indicates the best quality for the second data signal, or wherein the quality information indicates a better quality for the first data signal than for the second data signal and wherein the second data signal is selected in both reordering operations or for both subsets.

The matrix decompositions can correspond to a QR-decomposition or a Cholesky-decomposition. The means for generating can be adapted for generating the modified receive signals based on a result of a matrix decomposition. The means for determining can be adapted for calculating Log-Likelihood-Ratios of transmit symbols of the first and the second data signal as data detection information. The means for providing can be adapted for providing a subset of the modified receive signals and at least a part of the result of the matrix decomposition to the first or second mobile transceiver as data detection information. In such an embodiment, the matrix decomposition may be such that a result refers to all of the data signals of the first or second mobile transceiver, accordingly the modified receive signals may refer to all data signals of the first or second mobile transceiver. Thus, when provided to the first or second transceiver station, APP-detection may be carried out the respective mobile transceiver station.

Embodiments may further provide a method for providing first data detection information on a first data signal of a first mobile transceiver and second data detection information on a second data signal of a second mobile transceiver. The method comprises a step of communicating with the first mobile transceiver for receiving a first receive signal vector from the first mobile transceiver, the first receive signal being received from a base station transceiver by the first mobile transceiver and communicating with the second mobile transceiver for receiving a second receive signal vector from the second transceiver, the second receive signal being received from the base station transceiver by the second mobile transceiver. The method further comprises a step of determining the data detection information on the first data signal and data detection information on the second data signal based on the first receive signal vector and the second receive signal vector. The method comprises providing the data detection information on the first data signal to the first mobile transceiver and providing the data detection information on the second data signal to the second mobile transceiver.

Embodiments may further comprise a computer program having a program code for performing one of the above methods when the computer program is executed on a computer or processor.

Brief description of the Figures

Some other features or aspects will be described using the following non-limiting embodiments of apparatuses and/or methods and/or computer programs by way of example only, and with reference to the accompanying figures, in which

Figure 1a shows a block diagram of an embodiment of an apparatus;

Figure 1b shows a flow chart of an embodiment of a method;

Figure 1c illustrates an embodiment in a scenario at a charging station for electric cars;

Figure 2 illustrates MIMO subspaces determined by a subset;

Figure 3 illustrates simulation results obtained for embodiments, showing uncoded BER versus SNR;

Figure 4 illustrates simulation results obtained for embodiments, showing achievable rates versus SNR;

Figure 5 illustrates simulation results obtained for embodiments, showing uncoded BER versus SNR;

Figure 6 illustrates simulation results obtained for embodiments, showing achievable rates versus SNR;

Figure 7a illustrates a pseudo code of an embodiment providing a method;

Figure 7b illustrates a flow chart of an embodiment of a method;

Figure 7c illustrates a flow chart of another embodiment providing a method;

Figure 8a illustrates link level simulation parameter settings;

Figure 8b illustrates a comparison of embodiments considering computational complexity in terms of real multiplications, additions and divisions; and

Figure 8c illustrates a performance comparison of embodiments considering normalized computational complexity.

Description of some Embodiments

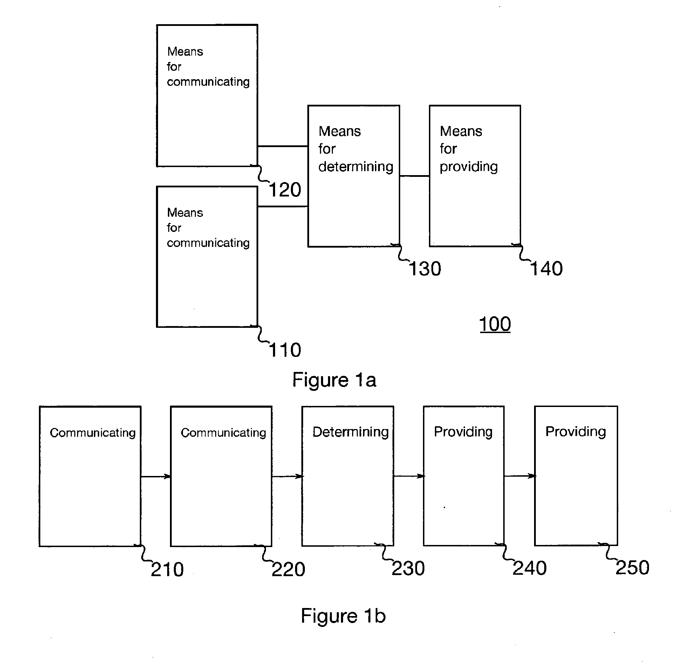

Figure 1a shows a block diagram of an embodiment of an apparatus 100 for providing first data detection information on a first data signal of a first mobile transceiver and second data detection information on a second data signal of a second mobile transceiver. The apparatus comprises means 110 for communicating with the first mobile transceiver for receiving a first receive signal vector from the first mobile transceiver, the first receive signal having been received from a base station transceiver by the first mobile transceiver. The apparatus 100 further comprises means 120 for communicating with the second mobile transceiver for receiving a second receive signal vector from the second transceiver, the second receive signal having been received from the base station transceiver by the second mobile transceiver. In other words, the apparatus 100 may determine or detect data detection information on two data signals dedicated to two different users by receiving the receive signals from the two users. As the first receive signal received by the first user also comprises a signal dedicated to the second user, when using the same radio resources, however, experienced as interference by the first user, the apparatus 100 may exploit diversity gain from both receive signals.

The apparatus 100 further comprises means 130 for determining the data detection information on the first data signal and data detection information on the second data signal based on the first receive signal vector and based on the second receive signal vector. The data detection information may correspond to the detected data signals, to Log- Likelihood- Ratios, to probability or reliability information on the data; etc. In other embodiments the data detection information may correspond to any information, which enables the mobile transceiver to detect its data signal with a better quality or a higher reliability. Such information may therefore help or improve data detection at a mobile transceiver. For example, modified receive signals together with a modified channel estimate may be provided as data detection information, where the modified quantities may enable the mobile transceiver to more reliably detect its data signal. The modified quantities may establish a modified MIMO system, which can be smaller in scale than the overall MIMO system, i.e. the MIMO system composed of al receive antennas of the mobile transceivers. The modified MIMO may comprise reduced interference, i.e. the apparatus may determine, e.g. through matrix modifications, a modified MIMO system, which is then provided to the mobile transceiver. In other words, the apparatus may provide a modified received signal and a modified channel estimate to a mobile transceiver as data detection information, in which interference may be reduced compared to the mobile transceiver's original receive signal and original channel estimate.

Moreover, the apparatus 100 may comprise means 140 for providing the data detection information on the first data signal to the first mobile transceiver and for providing the data detection information on the second data signal to the second mobile transceiver. Summarizing in simpler words, embodiments of the apparatus 100 may use receive signals received by multiple mobile transceivers. From the multiple receive signals information on the corresponding multiple data signals or data detection information can be determined or detected, exploiting the diversity gain of the multiple receive signals as in a MIMO system. Therewith, problems arising from closely spaced receive antennas (e.g. at mobile terminals) can be overcome.

Embodiments may provide the corresponding method for providing first data detection information on a first data signal of a first mobile transceiver and second data detection information on a second data signal of a second mobile transceiver. Figure 1b shows a flow chart an embodiment of a method, which comprises a step 210 of communicating with the first mobile transceiver for receiving a first receive signal vector from the first mobile transceiver, the first receive signal being received from a base station transceiver by the first mobile transceiver. Moreover the method comprises a step 220 of communicating with the second mobile transceiver for receiving a second receive signal vector from the second transceiver, the second receive signal being received from the base station transceiver by the second mobile transceiver. The method further comprises a step 230 of determining the data detection information on the first data signal and data detection information on the second data signal based on the first receive signal vector and the second receive signal vector. The method further comprises a step 240 of providing the data detection information on the first data signal to the first mobile transceiver and providing 250 the data detection information on the second data signal to the second mobile transceiver. Embodiments may also provide a computer program having a program code for performing on of the methods described herein when the computer program is executed on a computer or processor.

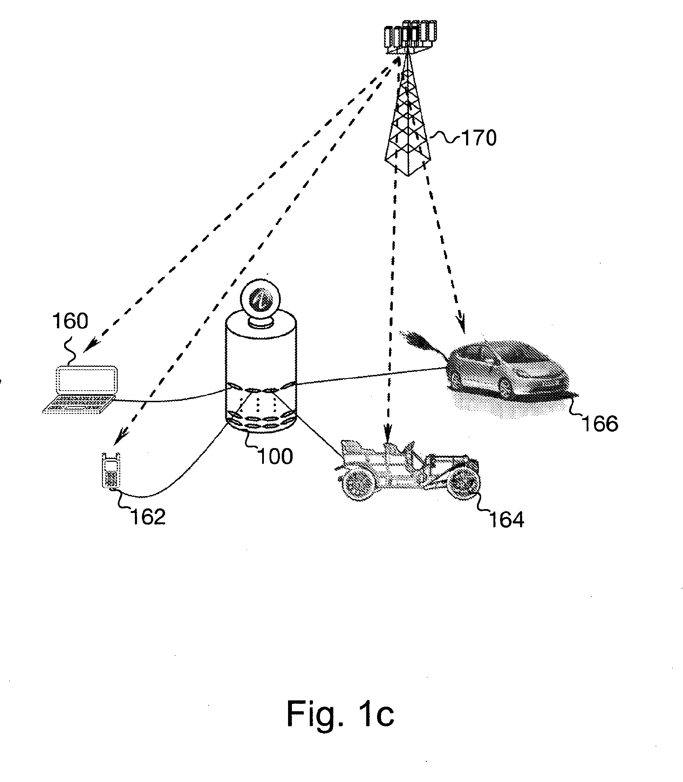

Figure 1c illustrates an embodiment in a scenario at a charging station for electric cars. In Figure 1c an embodiment of an apparatus 100 is placed, for example, at a charging station for electric cars. The apparatus 100 is surrounded by multiple mobile transceivers, as e.g. a laptop computer 160, a cell phone 162, two cars 164 and 166, etc. As indicated by the wiring shown in the figure, in this embodiment it is assumed, that the means communicating 110 and 120 are adapted for communicating in a wired manner with the mobile transceiver stations. In other embodiments other interfaces as e.g. NFC (as abbreviation for Near- Field- Communication)- interfaces, Bluetooth- interfaces, WLAN (as abbreviation for Wireless Local Area Network)- interfaces, etc. may be used as means for communicating. The means 110 for communicating with the first mobile transceiver, as e.g. the laptop computer 160 in Figure 1c, may not be the same as the means 120 for communicating with the second mobile transceiver, as e.g. the car 166 in Figure 1c. In some embodiments the means 110 and 120 can be implemented as the same wired or wireless interface, in other embodiments they can be implemented as different interfaces, particularly one may be wired while the other one is wireless. As will be detailed subsequently, in some embodiments the apparatus 100 may be comprised in the first or second mobile transceiver, e.g. in a cell phone or a car, then one of the means 110, 120 for communicating may correspond to an internal connection to a receiver means implemented in a same housing, while the other means for communicating may correspond to a wired or wireless connection to another mobile transceiver.

Figure 1c also shows a base station transceiver 170 transmitting signals to the mobile transceivers 160, 162, 164, and 166. The embodiment of the apparatus 100 may comprise common interfaces with the lap-top 160, the smart phone 162, the automobile 164 and the electric car 166, etc. The apparatus 100 can communicate with the users 160-166 through the connection with the common interface. The apparatus 100 may have a computation coordination capability, concerning MIMO detection algorithms, some of which will be detailed in the further description of embodiments subsequently. The scenario of Figure 1c shall illustrate that an embodiment of an apparatus 100 may be placed at a location with certain traffic demand, for example, a charging station of electric cars, in a train, in a car for coordination with other cars or multiple mobile device in the car, at any hot spot, etc.

For the further description it is assumed that the number of antennas at the base station transceiver 170 is denoted by $M_T$, and the sum of the receive antennas in the massive or composed MIMO system can be given by

$$M_R = \sum_{i=1}^{L} M_{R_i} \geq M_T$$

where $M_{Ri}$ stands for the number of receive antennas of i -th user equipment or mobile transceiver. There are totally L active user equipments in the $M_T \times M_R$ massive MIMO system.

The functionality between an embodiment of the apparatus 100 and the mobile transceivers can be shared to some extent. For example, in some embodiments the means for determining 130 can be adapted for determining a first estimated radio channel between the first mobile transceiver and the base station transceiver and for determining a second estimated radio channel between the second mobile transceiver and the base station transceiver. In other words, the individual radio channels for each of the mobile transceivers may be determined or utilized by the embodiment. Moreover, the means for determining 130 can be further adapted for determining the data detection information on the first data signal and the data detection information on the second data signal based on the information on the first estimated radio channel and the information on the second estimated radio channel. In such an embodiment, the individual radio channels may be determined either by the individual mobile transceivers themselves or by the apparatus 100.

Hence, the means 110 for communicating with the first mobile transceiver can be further adapted for receiving information on the first estimated radio channel between the first mobile transceiver and the base station transceiver from the first mobile transceiver. Consequently, the means 120 for communicating with the second mobile transceiver can be further adapted for receiving information on the second estimated radio channel between the second mobile transceiver and the base station transceiver from the second mobile transceiver.

Furthermore, each of the mobile transceivers may operate multiple receive antennas, i.e. each of the multiple mobile transceivers may establish an individual MIMO system. The first estimated radio channel may refer to a multiple-input- multiple- output radio channel between a plurality of transmit antennas at the base station transceiver and a plurality of receive antennas at the first mobile transceiver. Consequently, the first receive signal vector may refer to a plurality of receive signals received at a plurality of receive antennas at the first mobile transceiver. Accordingly, the information on the second estimated radio channel may refer to a multiple- input- multiple- output radio channel between the plurality of transmit antennas at the base station transceiver and a plurality of receive antennas at the second mobile station transceiver, and the second receive signal vector may refer to a plurality of receive signals received at a plurality of receive antennas at the second mobile transceiver. In other words, the means 130 for determining may carry out the channel estimation based on the receive signal vectors provided by the mobile transceivers. In other embodiments, the mobile transceiver may estimate their individual channels themselves and provide the results to the apparatus 100.

The means 130 for determining can be adapted for determining the first radio channel estimate as a first radio channel matrix and the second radio channel estimate as a second radio channel matrix. Furthermore, the means 130 for determining can be adapted for determining a radio channel matrix **H** between the plurality of transmit antennas at the base station and the plurality of receive antennas at the first and the second mobile transceiver, the radio channel matrix **H** having at least one channel coefficient for each combination of one of the plurality of transmit antennas at the base station transceiver and one of the plurality of receive antennas at the first and second mobile transceiver. In other words the means 130 for determining may determine an overall radio channel matrix **H**, representing a MIMO radio channel between the multiple transmit antennas at the base station transceiver and the multiple receive antennas distributed over the multiple mobile transceivers.

The means 130 for determining can be further adapted for determining subsets of data signals, and for determining one sub-matrix for each subset of data signals, wherein each of the data signals is comprised in at least one of the subsets. I.e. the means 130 may further subdivide the problem of detecting the full set of MIMO signals in subsets of signals, for which a sub-divided MIMO radio channel can be represented by a sub-matrix.

The means 130 for determining may further comprise means for generating modified received signals for each subset, means for calculating data detection information for each data signal in each subset, and the means 130 for determining may be further adapted for determining the data detection information on the first and second data signal based on the data detection information for each data signal in each subset. In other words, the MIMO system may be sub-divided in multiple smaller sized sub-MIMO systems, which can then be resolved separately and the results of which can then be combined to obtain the overall result.

The means 130 for determining can be adapted for determining the subsets by determining quality information on the first and second data signal based on the plurality of receive signal vectors and the channel matrix **H**, a sub-matrix being based on a subset of coefficients selected from the channel matrix **H** based on the quality information. In other words, the subsets of receive signals may be determined by evaluating the quality of the receive signals, for example, by means of linear filtering techniques as ZF, MMSE, etc.

In the following, it is assumed that a $M_T \times M_R$ MIMO system is given by equation

$$\mathbf{y} = \mathbf{Hs} + \mathbf{n} \, .$$

The transmit signal vector is denoted as s. Additionally, it holds $E[\mathbf{ss}^H] = (E_s/M_T) \cdot \mathbf{I}_{Mt}$ and $E_s = 1$. The vector **n** stands for Additive White Gaussian Noise (AWGN as abbreviation) with $E[\mathbf{nn}^H] = \sigma^2 \cdot \mathbf{I}_{Mr}$. The MIMO radio channel matrix is **H**, whose arbitrary element $[\mathbf{H}]_{i,j}$ representing the radio channel between transmit antenna $i$ and receive antenna j, obeys independent and identically distributed complex Gaussian distribution, i.e., $[\mathbf{H}]_{i,j} \sim CN(0, 1)$.

As has been described above, embodiments may detect a first and a second data signal from a plurality of receive signals, the first and the second data signal being comprised in a plurality of transmitted data signals being transmitted using a plurality of transmit antennas and being received using a plurality of receive antennas at the mobile transceivers. The radio channel matrix **H** represents the radio channel between the plurality of transmit antennas and the plurality of receive antennas, the radio channel matrix **H** having at least one channel coefficient for each combination of one of the plurality of transmit antennas and one of the plurality of receive antennas. The means 130 for determining may determine a first and a second sub-matrix based on the radio channel matrix **H**, the first and the second sub-matrix having less coefficients than the radio channel matrix **H** and the first and the second sub-matrix having different coefficients. In other words, multiple mutually different sub-matrices can be considered.

The means for generating may generate the modified first and second receive signals based on the radio channel matrix and based on the first and the second sub-matrix. The means for calculating may calculate the first data detection information on the first and second data signal based on the first sub-matrix and the modified first receive signals, and may calculate second data detection information on the first and second data signal based on the second sub-matrix and the modified second receive signals. The apparatus 100 may further detect the first and the second data signal based on the first and the second data detection information.

In embodiments the apparatus 100 may further comprise means for estimating the radio channel matrix **H** between the plurality of transmit antennas and the plurality of receive antennas. In other words, in some embodiments, the radio channel estimate may be provided from the outside, e.g. from a radio transceiver. In other embodiments a radio channel estimator may be comprised in the apparatus 100. In embodiments, the apparatus may comprise means for detecting the first and the second data signal. In some embodiments the apparatus 100 may therefore provide a signal for detection at an output, or, it may comprise a detector itself and may provide the data signal, reliability information or data detection information thereon, respectively.

In embodiments the means 130 for determining can be adapted for determining the first and second sub- matrix by determining quality information on the first and second data signal based on the plurality of receive signals and the radio channel matrix **H**, the first and the second sub- matrix being based on a modification of the radio channel matrix **H** based on the quality information. Such quality in formation may be obtained differently in different embodiments. One possibility would be a Log- Likelihood- Ratio, e.g. obtained by ZF- filtering or ZF- equalization.

In ZF equalization-based detection, the ZF equalization matrix can be given by

$$\mathbf{W}_{ZF} = (\mathbf{H}^H \mathbf{H})^{-1} \mathbf{H}^H$$

Hence, the detected signal can be represented by

$$\mathbf{s}_{ZF} = \mathbf{W}_{ZF} \mathbf{y} = (\mathbf{H}^H \mathbf{H})^{-1} \mathbf{H}^H \mathbf{Hs} + (\mathbf{H}^H \mathbf{H})^{-1} \mathbf{H}^H \mathbf{n} = \mathbf{s} + \mathbf{n}_{ZF}$$

where $n_{ZF} = (\mathbf{H}^H \mathbf{H})^{-1} \mathbf{H}^H \mathbf{n}$ denotes the filtered noise vector. Let the covariance of vector $n_{ZF}$ be considered. It yields

straightforwardly

$$\mathbf{R}_{\mathbf{n}_{ZF}} = E\left[\mathbf{n}_{ZF}\mathbf{n}_{ZF}{}^{H}\right] = E\left[(\mathbf{H}^{H}\mathbf{H})^{-1}\mathbf{H}^{H}\mathbf{n}\mathbf{n}^{H}\mathbf{H}(\mathbf{H}^{H}\mathbf{H})^{-1}\right] = \sigma^{2}E\left[(\mathbf{H}^{H}\mathbf{H})^{-1}\right]$$

Hence, the instantaneous ZF post- processing noise variance of the k- th transmit data stream can be approximated by

$$\sigma^{2}_{p,ZF,k} = \sigma^{2}\cdot\left[(\mathbf{H}^{H}\mathbf{H})^{-1}\right]_{k,k}$$

Furthermore, assume that the ZF post- processing noise still obeys a complex Gaussian distribution. Considering ZF per antenna detection, the Log- Likelihood Ratio (LLR) of the j- th bit in the *k*- th transmit data stream can be given by

$$\mathrm{LLR}_{[\mathbf{s}_{ZF}]_{k}}^{(j)} \approx \log\left(\sum_{a_{i}\in A_{j}^{1}}\exp(-\frac{\left|[\mathbf{s}_{ZF}]_{k}-a_{i}\right|^{2}}{\sigma_{p,ZF,k}^{2}})\right) - \log\left(\sum_{a_{i}\in A_{j}^{0}}\exp(-\frac{\left|[\mathbf{s}_{ZF}]_{k}-a_{i}\right|^{2}}{\sigma_{p,ZF,k}^{2}})\right)$$

where $a_i$ stands for the i- th signal constellation, and $A_j^1$ and $A_j^0$ denote the subsets of the constellation candidates whose j- th bit is 1 and 0, respectively. In embodiments the LLR can be used as quality information, based on which subsets and the respective sub- matrices can be determined.

Linear detection algorithms, e.g. Minimum Mean Square Error (MMSE), Zero-Forcing (ZF), have low computational requirement. Nevertheless, the diversity order will decrease, if the number of transmission signal streams increases. In the reality, an MMSE algorithm suffers from noise estimation error and serious degradation under block fading channel, and ZF algorithm has to combat against noise amplification and the ill-conditioned channel matrix, if $M_R \leq M_T$ holds, where $M_R$ and $M_T$ denote the number of receive and transmit antennas, respectively. In embodiments such algorithms may be utilized for evaluation of quality information based on which subsets and the respective sub-matrices can be determined.

The APP detection algorithm, which is also denoted as Maximum Likelihood Detection (MLD) algorithm, delivers the upper bound performance. Nevertheless, its extremely high computational requirement may not be affordable within massive MIMO systems. Sphere decoding provides the detection strategy to reduce the number of signal candidates. Generally, it is an effective solution to approach the APP upper bound performance. Nevertheless, the search depth of MIMO detection varies from time to time with respect to different channel realizations. Thus, this will negatively influence the hardware implementation. Embodiments may therefore use one of the above linear detection algorithms to determine a subset of signals, which may then be detected using APP.

The APP algorithm can jointly detect the $M_T$ transmit data streams, considering the conditional Probability Density Function

$$p(\mathbf{y}\mid a_{1},a_{2},\cdots,a_{M_{T}}) = \left(\frac{1}{\pi\sigma^{2}}\right)^{M_{T}}\exp(-\frac{\left\|\mathbf{y}-\mathbf{Ha}\right\|^{2}}{\sigma^{2}})$$

where a = [$a_1$ $a_2$ ... $a_{Mt}$]$^T$ denotes an arbitrary detection symbol vector candidate. Let B denote the set of constellation symbols, with {$a_1$, $a_2$, ..., $a_{Mt}$} $\subset B$ Thus, the Log- Likelihood Ratio (LLR) of the j- th bit in the k- th transmit data stream can be computed by

$$\mathrm{LLR}_{[\mathbf{y}]_k}^{(j)} = \log\left(\sum_{\mathbf{a}:\,[\mathbf{a}]_k \in B_{j,k}^1} \exp(-\frac{\|\mathbf{y}-\mathbf{Ha}\|^2}{\sigma^2})\right) - \log\left(\sum_{\mathbf{a}:\,[\mathbf{a}]_k \in B_{j,k}^0} \exp(-\frac{\|\mathbf{y}-\mathbf{Ha}\|^2}{\sigma^2})\right)$$

where $B_{j,k}^1$ and $B$ $B_{j,k}^0$ denote the subsets of the constellation candidates of the k- th data stream whose j- th bit is 1 and 0, respectively.

Embodiments will subsequently be discussed using results of point-to-point link layer simulations, which will be explained in the following. One figure of merit is the corresponding gap to the optimum performance. The capacity of the ergodic MIMO channel can be provided as

$$C = E\left[\log_2\left|\mathbf{I}_{M_R} + \frac{\rho}{M_T}\mathbf{HH}^H\right|\right]$$

where p denotes the Signal-to-Noise Ratio (abbreviated as SNR), defined by $\rho = E_s/\sigma^2$. Bit-wise mutual information can be computed to quantify the remaining gap to capacity, cf. ten Brink, S.; "Designing Iterative Decoding Schemes with the Extrinsic Information Transfer Chart," AEÜ International Journal of Electronics and Communications, vol.54, no.6, pp. 389-398, Nov. 2000. Let $p(\ell \mid X_{\mathrm{LLR}}^{(0)})$ and $p(\ell \mid X_{\mathrm{LLR}}^{(1)})$ denote the PDF of the LLR values under the condition that bit 0 and bit 1 are transmitted, respectively. The bit-wise mutual information can then be computed as

$$I = \frac{1}{2} \cdot \sum_{b=0,1} \int_{-\infty}^{+\infty} p(\ell \mid X_{\mathrm{LLR}}^{(b)}) \cdot \log_2 \frac{2 p(\ell \mid X_{\mathrm{LLR}}^{(b)})}{\sum_{c=0,1} p(\ell \mid X_{\mathrm{LLR}}^{(c)})} \, \mathrm{d}\ell .$$

In order to explain the sub-matrix determination of embodiments, a $M_T \times M_R$ MIMO system is modeled by

$$\mathbf{y} = \mathbf{Hs} + \mathbf{n} .$$

An arbitrary channel matrix **H** is QR decomposable as **H** = **QR**, where **Q** is an $M_R \times M_R$ unitary matrix with $\mathbf{QQ}^H = \mathbf{I}_{\mathrm{MR}}$, and the $M_R \times M_T$ matrix **R** can be given by

$$\mathbf{R} = \left[\begin{array}{c} \tilde{\mathbf{R}}_{M_T \times M_T} \\ \hline \mathbf{0}_{(M_R - M_T) \times M_T} \end{array}\right]$$

where $\tilde{\mathbf{R}}_{MT \times MT}$ is an $M_T \times M_T$ upper triangular matrix and $0_{(MR-MT) \times M}{}^T$ is an $(M_R - M_T) \times M_T$ null matrix. Obviously, it holds

$$\mathbf{y}_{QR} = \mathbf{Q}^H \mathbf{y} = \mathbf{Q}^H (\mathbf{Hs} + \mathbf{n})$$

$$= \mathbf{Q}^H (\mathbf{QRs} + \mathbf{n}) = \mathbf{Rs} + \mathbf{Q}^H \mathbf{n}$$

$$= \mathbf{Rs} + \mathbf{n}_{QR} .$$

Notice that the covariance of noise vector $n_{QR}$ can be given by

$$\mathbf{R}_{\mathbf{n}_{QR}} = E\left[\mathbf{n}_{QR} \mathbf{n}_{QR}{}^H\right] = E\left[\mathbf{Q}^H \mathbf{nn}^H \mathbf{Q}\right] = \sigma^2 E\left[\mathbf{Q}^H \mathbf{Q}\right] = \sigma^2 \mathbf{I}_{M_R} .$$

Namely, the filtered noise vector $n_{QR}$ has the same long-term statistics as $\mathbf{n}$. If $M_T = M_R$, the matrix $\mathbf{R}$ can be represented by

$$\mathbf{R} = \begin{bmatrix} R_{1,1} & R_{1,2} & \cdots & R_{1,M_T-2} & R_{2,M_T-1} & R_{1,M_T} \\ 0 & R_{2,2} & \cdots & R_{2,M_T-2} & R_{2,M_T-1} & R_{2,M_T} \\ 0 & 0 & \ddots & \vdots & \vdots & \vdots \\ \vdots & \vdots & \ddots & R_{M_T-2,M_T-2} & R_{M_T-2,M_T-1} & R_{M_T-2,M_T} \\ 0 & 0 & \cdots & 0 & R_{M_T-1,M_T-1} & R_{M_T-1,M_T} \\ 0 & 0 & \cdots & 0 & 0 & R_{M_T,M_T} \end{bmatrix} .$$

It is noticed, that an arbitrary square sub-matrix of the lower part of $\mathbf{R}$ may establish a sub-MIMO system, i.e. may serve as sub-matrix in embodiments. In embodiments the corresponding signal streams of this sub-MIMO system can be independently detected, without considering the inter-stream interference from the rest of the signal streams out of this sub-MIMO system. In embodiments the sub-matrix of $\mathbf{R}$ may be provided as data detection information to a mobile user together with modified receive signals $y_{QR}$. In other words, in embodiments a sub-matrix may be formed such that all data signals of a certain mobile transceiver station are comprised in the so formed sub-system. The information on the sub-system, i.e. modified received signals and sub-matrix, can then be provided to the mobile transceiver such that APP detection can be carried out at the respective mobile transceiver. In other words, the means 140 for providing can be adapted for providing a subset of the modified receive signals and at least a part of the result of the matrix decomposition to the first or second mobile transceiver as data detection information.

Obviously, a full APP detection for the $M_T \times M_R$ MIMO system becomes significantly more complex when the number of data streams $M_T$ increases, while, however, applying the APP detection algorithm to the individual sub-MIMO systems still stays feasible. To further scale the complexity, there are several degrees of freedom to adjust the dimensions of the individual sub-MIMO systems.

As it was explained above, in embodiments a sub-matrix can be a triangular matrix based on a reordering operation on the channel matrix $\mathbf{H}$ based on the quality information and a subsequent decomposition of the channel matrix $\mathbf{H}$. A sub-matrix may correspond to a sub-matrix of a triangular matrix resulting from the decomposition of the reordered channel matrix $\mathbf{H}$ according to reordering operations, where a reordering operation can be different for each subset.

The reordering may correspond to a selection of a subset of transmit signals, the subset of transmit signals can be selected based on the quality information, where in a first reordering operation transmit signals can be selected among which the quality information indicates the best quality for the first data signal, and where in a second reordering operation transmit signals can be selected among which the quality information indicates the best quality for the second data signal. Alternatively, when the quality information indicates a better quality for the first data signal than for the second data signal, the second data signal can be selected in both reordering operations or for both subsets.

The matrix decompositions may correspond to a QR-decomposition or a Cholesky-decomposition or any other matrix triangularization operation. The means for generating can be adapted for generating the modified receive signals based on a result of the matrix decomposition. The means 130 for determining can be adapted for calculating Log-Likelihood-Ratios of transmit symbols of the first and the second data signal as data detection information.

In order to create and rank the different sets of signal streams, i.e. in order to determine the sub-matrices and subsets, embodiments may compute a metric $\mu_k$, which indicates the reliability of the k-th signal stream or data signal, and which may serve as quality information in embodiments. For instance, the metric or quality information can be the post-processing Signal-to-Interference-plus-Noise Ratio (abbreviated as SINR), or the symbol-wise LLR after simple linear pre-processing, such as ZF, MMSE. In the following, embodiments using the LLR of ZF detection as quality information or for the metric $\mu_k$ of the k-th signal stream or data signal as

$$\mu_k = \sum_{j=1}^{M} \mathrm{LLR}^{(j)}_{[\mathbf{s}_{\mathrm{ZF}}]_k}$$

are considered, where M denotes the number of bits per transmit antenna symbol. In embodiments, each APP detection set or sub-MIMO system may be based on a QR triangularization, the different sets can be obtained by exchanging the columns of the MIMO channel matrix **H** in order to group the specified signal streams into this detection set. In other words, in embodiments the first sub-matrix can be based on a first reordering operation on the radio channel matrix **H** based on the quality information and a subsequent decomposition of the radio channel matrix **H**, and the second sub-matrix can be based on a second reordering operation on the radio channel matrix **H** based on the quality information and a subsequent decomposition of the radio channel matrix **H**.

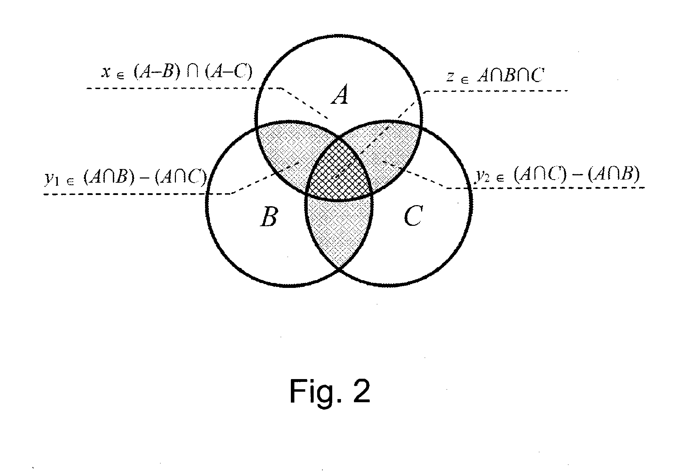

Figure 2 illustrates MIMO subspaces determined by a subset. In Figure 2 an exemplary illustration is provided, in which three detection sets *A,* B and C are defined. Obviously the union of sets *A, B* and *C* comprises the complete indexes of $M_T$ transmit data streams or data signals as

$$A \cup B \cup C = \left\{ 1, 2, \cdots, M_T - 1, M_T \right\}.$$

Without loss of generality, the set A is considered for the further description of embodiments. As illustrated in Figure 2, the signal streams *x* can be detected within one APP processing. Hence, they are assumed to have high reliability with respect to the corresponding metrics $\mu_k$. The signal streams $y_1$, $y_2$ and especially the signal streams z are assumed to be less reliable.

In embodiments, the reordering may correspond to a selection of a subset of transmit signals, the subset of transmit signals being selected based on the quality information. In the above described embodiment the reordering of the columns of the radio channel matrix **H** corresponds to the selection of a subset of transmit signals. For example, in the first reordering operation transmit signals can be selected among which the quality information indicates the best quality for the first data signal. In a second reordering operation transmit signals can be selected among which the quality information indicates the best quality for the second data signal. Alternatively, when the quality information indicates a better quality for the first data signal than for the second data signal, the second data signal can be selected in both reordering operations or for both subsets.

In embodiments the apparatus 100 can be further adapted for detecting data signals for all of the transmitted data signals, wherein the means 130 for determining can be adapted for determining at least two sub-matrices based on the radio channel matrix **H**, wherein the at least two sub-matrices comprise at least one coefficient for each of the plurality of transmitted data signals. The means 130 for determining can be adapted for determining subsets of data signals and for determining one sub-matrix for each subset of data signals, where each of the transmitted data signals is comprised in at least one of the subsets.

The means for generating can be adapted for generating modified received signals for each subset and the means for calculating may be further adapted for calculating data detection information for each data signal in each subset. The means for detecting can be adapted for detecting each data signal based on the data detection information. The means for detecting can be adapted for performing a Maximum-Likelihood-Detection per subset and for combining the Maximum-Likelihood-Detection results of each subset to detect the data signals. Generally, in embodiments the means for detecting may use any highly reliable or high complexity detection approach. The means 130 for determining can be adapted for determining the subsets such that each of the transmitted signals is only comprised in one subset or such that at least one of the transmitted signals is comprised in at least two subsets.

In other words, embodiments may create some sub-sets of signal streams or data signals, which establish some sub-MIMO systems, which can accordingly be modeled using sub-matrices of lower dimensions. The dimension of a sub-MIMO system can be assumed to be low enough, so that e.g. the APP detection algorithm is still allowed, e.g. still within the complexity boundaries of an available hardware. In order to create the signal stream sets, a metric $\mu_k$ can be computed as quality information, which indicates the reliability of $k$-th signal stream, e.g. the first or second data signal, to be correctly detected. For instance, the metric can be the post-processing Signal-to-Interference-plus-Noise Ratio, or the symbol-wise Log-Likelihood Ratio after simple pre-processing. If, in an embodiment, each stream only appears once in a sub-MIMO system, such detection algorithm can be denoted as Non-Overlapped Subspace Detection (NOSD as abbreviation). In other embodiments, the high reliable and low reliable signal streams may be grouped in a set together, deploying APP detection, and a low reliable signal stream may appear in several different signal stream sets. In embodiments, the reliability of this signal stream may thus be improved due to additional diversity. To these embodiments it may also be referred to as Overlapped Subspace Detection (OSD as abbreviation) algorithm.

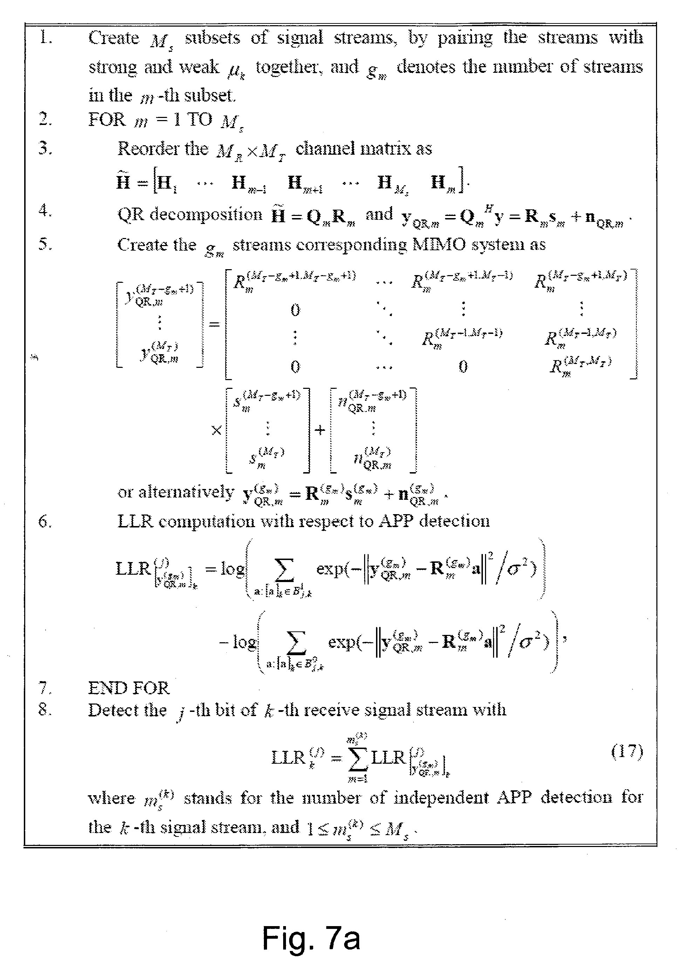

Before presenting simulation results obtained for some embodiments, Figure 7a shall be discussed providing another sequential representation of an embodiment of a method.

Figure 7a illustrates a pseudo code of an embodiment providing a method. Figure 7a shows a sequence of 8 steps. In the first step, $M_s$ subsets of signal streams or data signals are formed, e.g. by pairing strong and weak streams or data signals together, which can be evaluated by corresponding quality information $\mu_k$, $g_m$ may denote the number of streams or data signals in the m-th subset. In the second step a for-loop is indicated, wherein the index m is iterated from 1 to $M_s$, i.e. a counter starting from 1 and counting up to the total number of subsets. In the third step the reordering operation is carried out based on the radio channel matrix **H**, the result of which is referred to as

$$\widetilde{\mathbf{H}} = \begin{bmatrix} \mathbf{H}_1 & \cdots & \mathbf{H}_{m-1} & \mathbf{H}_{m+1} & \cdots & \mathbf{H}_{M_s} & \mathbf{H}_m \end{bmatrix}.$$

Note, that in the third step the column vectors for the desired data signals or streams are moved to the right, which is indicated by $\mathbf{H}_m$ on the right hand side of the above equation, i.e. the dimension of the matrix stays the same only the order of the columns is changed in this step. The index shows that for each subset a different reordering operation may be carried out.

In a fourth step the matrix decomposition is carried out. In this embodiment a QR decomposition is considered, thus

$$\widetilde{\mathbf{H}} = \mathbf{Q}_m \mathbf{R}_m \ \text{and} \ \mathbf{y}_{\mathrm{QR},m} = \mathbf{Q}_m^H \mathbf{y} = \mathbf{R}_m \mathbf{s}_m + \mathbf{n}_{\mathrm{QR},m}.$$

In other words, the result of the decomposition, i.e. matrices Q and R, can be used for further processing. The modified received signals can for example be obtained according to the above operation $\mathbf{y}_{\mathrm{QR},m} = \mathbf{Q}_m^H \mathbf{y}$. For the subset yields in a fifth step

$$\begin{bmatrix} y_{\mathrm{QR},m}^{(M_T-g_m+1)} \\ \vdots \\ y_{\mathrm{QR},m}^{(M_T)} \end{bmatrix} =$$

$$\begin{bmatrix} R_m^{(M_T-g_m+1,M_T-g_m+1)} & \cdots & R_m^{(M_T-g_m+1,M_T-1)} & R_m^{(M_T-g_m+1,M_T)} \\ 0 & \ddots & \vdots & \vdots \\ \vdots & \ddots & R_m^{(M_T-1,M_T-1)} & R_m^{(M_T-1,M_T)} \\ 0 & \cdots & 0 & R_m^{(M_T,M_T)} \end{bmatrix} \cdot \begin{bmatrix} s_m^{(M_T-g_m+1)} \\ \vdots \\ s_m^{(M_T)} \end{bmatrix} + \begin{bmatrix} n_{\mathrm{QR},m}^{(M_T-g_m+1)} \\ \vdots \\ n_{\mathrm{QR},m}^{(M_T)} \end{bmatrix}$$

or alternatively

$$\mathbf{y}_{\mathrm{QR},m}^{(g_m)} = \mathbf{R}_m^{(g_m)}\mathbf{s}_m^{(g_m)} + \mathbf{n}_{\mathrm{QR},m}^{(g_m)}.$$

Based on the above, LLRs may be calculated in a sixth step, e.g. Log-Likelihood Ratios for APP detection, as

$$\mathrm{LLR}_{\mathbf{y}_{\mathrm{QR},m}^{(g_m)}}^{(j)} = \log\left[\frac{p(b_j = 1 \mid \mathbf{y}_{\mathrm{QR},m}^{(g_m)})}{p(b_j = 0 \mid \mathbf{y}_{\mathrm{QR},m}^{(g_m)})}\right] = \log\left[\frac{\displaystyle\sum_{\mathbf{a}:\,\mathbf{a}\in A_j^1}\exp\left(-\frac{\left\|\mathbf{y}_{\mathrm{QR},m}^{(g_m)} - \mathbf{R}_m^{(g_m)}\mathbf{a}\right\|^2}{\sigma^2}\right)}{\displaystyle\sum_{\mathbf{a}:\,\mathbf{a}\in A_j^0}\exp\left(-\frac{\left\|\mathbf{y}_{\mathrm{QR},m}^{(g_m)} - \mathbf{R}_m^{(g_m)}\mathbf{a}\right\|^2}{\sigma^2}\right)}\right].$$

In embodiments any highly reliable or high complexity detection approach may be used. From here, in a subsequent seventh step the $g_m$ receive signal streams in the $m$-th subset can be decoded. The eighth step may then close the for-loop started in the second step.

In embodiments, most unreliable streams $y_1$, $y_2$ and especially the signal streams z, cf. Figure 2, may be processed by multiple separate APP detections, cf. seventh step of Figure 7a. The reliability of these signal streams can be improved through additional diversity within the overlapped part of the signal subspace in Figure 2, i.e., by (though not statistically independent) adding the respective LLRs. This method is, thus, denoted as Overlapped Subspace Detection (OSD). Obviously, as a special case, Non-Overlapped Subspace Detection (NOSD) is obtained by choosing

$$A \cap B = B \cap C = A \cap C = \varnothing.$$

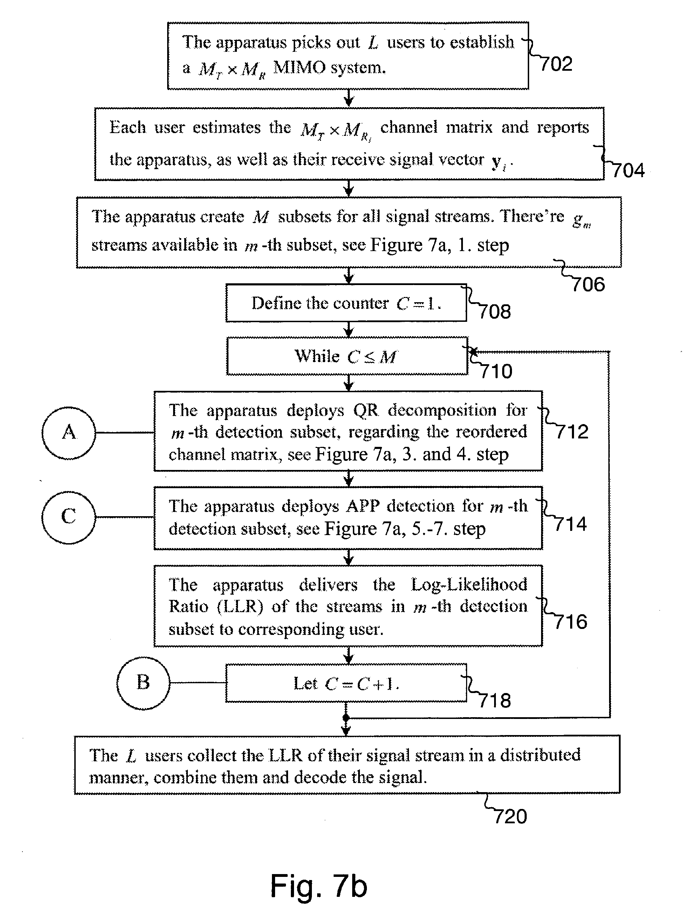

Figure 7b illustrates a flow chart of an embodiment of a method. In a first step 702 the apparatus 100 may pick out a number $L$ of users to establish a $M_T \times M_R$ MIMO system. In other words the apparatus 100 may further comprise means for selecting users to form a MIMO system. In a subsequent step 704 the $M_T \times M_R$ channel matrix is estimated, which can be composed of the individual smaller MIMO channel matrices of the individual users, on which the users may report the channel estimates to the apparatus 100 together with their receive signal vectors. In a following step 706 the apparatus 100 may create M subsets for all signal streams or data signals. There may be $g_m$ streams available in $m$-th subset, cf. Figure 7a first step. A counter C may be initiated in step 708 before a While-loop is started in step 710, which terminates when the counter has reached the number M of subsets. In a step 712 in the While-loop the apparatus 100 may employ QR-decomposition for the m-th detection subset, regarding the reordered channel matrix, cf. Figure 7a steps 3 and 4. Subsequently in step 714, the apparatus 100 may employ APP detection for the m-th detection subset as shown in Figure 7a in steps 5-7. In a further step 716, the apparatus 100 may deliver the Log-Likelihood-Ratio (LLR) of the streams or data signals in the m-th detection subset to the corresponding user. In step 718 the counter is increased for the next iteration of the While-loop starting at step 710. Once the While-loop has exited, in a subsequent step 720 for each of the L users, the LLR of their signal streams or data signals may be collected in a distributed manner, before they are combined and decoded.

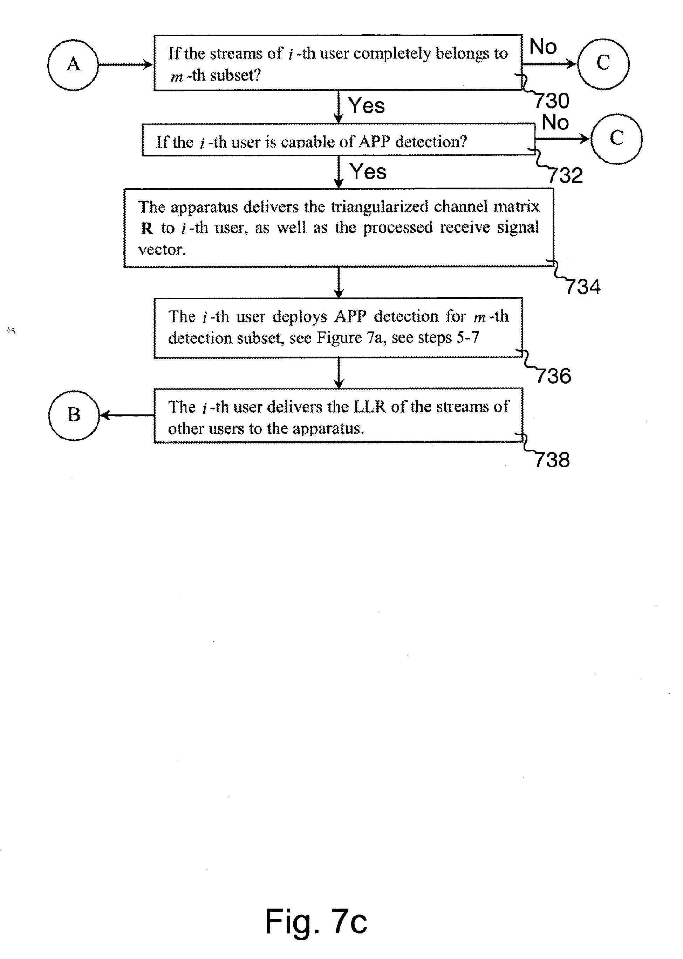

In embodiments several variations are conceivable, which are indicated by the three additional branches indicated in the flow chart of Figure 7b by "A", "B" and "C" and which are linked to the flow chart shown in Figure 7c. Figures 7b and 7c illustrate the coordination between the apparatus 100 and a user in an embodiment. In step 712, after the matrix decomposition, it can be checked whether the streams of an i-th user completely belong to the m-th subset in question, which is indicated by step 730 in Figure 7c. If this does not apply, the method may continue with step 714 as described above. If, however, the streams of the i-th user completely belong to the subset, then, in a step 732, it can be checked whether said i-th user equipment is capable of APP detection. If that is not the case, the method may continue with step 714 as described above. If the user has these capabilities, then in a step 734 the apparatus 100 may deliver the triangularized matrix **R** to the i-th user, as well as the processed receive signal vector. In such an embodiment the data detection information provided to user $i$ may correspond to the matrix **R** and the processed or modified receive signal vector. The matrix **R** and the processed or modified receive signal vector can be considered as data detection information, as they correspond to a MIMO-subset comprising the modified receive signals of the user with reduced interference, as other streams not being comprised in this subset do not take effect. The modified user signals are therefore more reliable or they are detectable with a higher reliability from the subset compared to a detection from the full MIMO system. In a further step 736 said i-th user may deploy APP detection as explained in Figure 7a in steps 5-7. Subsequently in step 738, the i-th user may deliver the LLRs of the streams of other users to the apparatus 100.

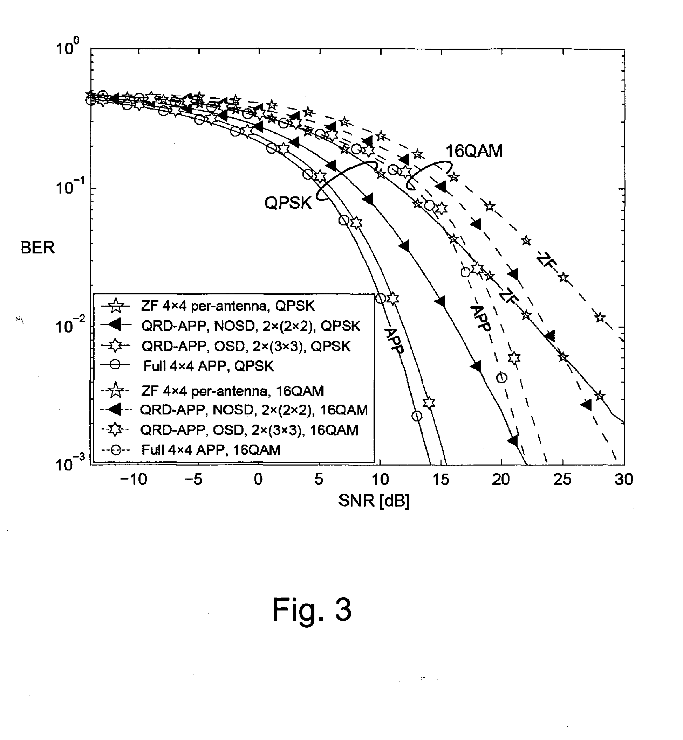

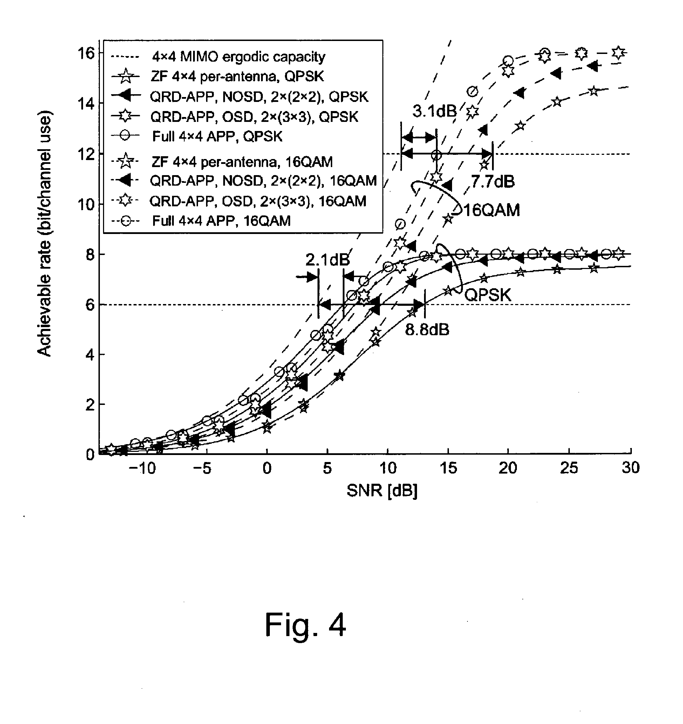

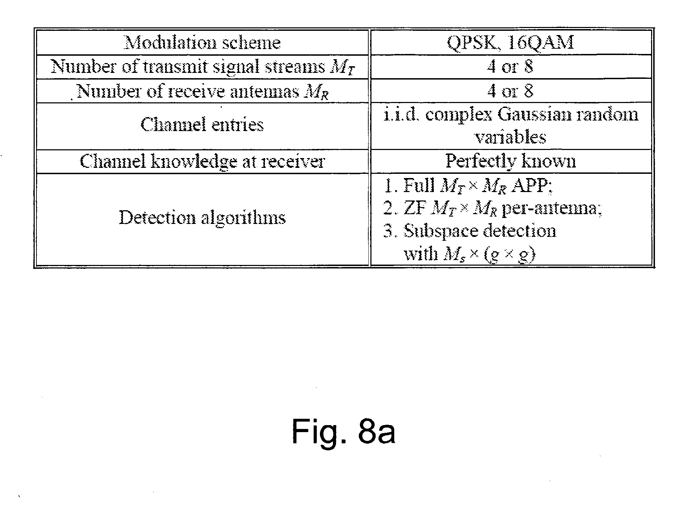

In the following, point-to-point link layer simulation results will be presented to evaluate the performance of embodiments, using the above described OSD and NOSD algorithms. Channel coding is not taken into account for the simulations. Hence, for the simulation results the uncoded Bit Error Rate (BER as abbreviation) is considered right after the LLR computation of the MIMO detection. Figure 3 shows BER versus SNR. The quality of the LLR soft output is evaluated by computing the achievable rate of the equivalent bit channel, cf. Figure 4. For the proposed OSD and NOSD algorithms, the notation $M_s \times (g \times g)$ indicates that $M_s$ detection sets are created, each of which having g signal streams. The table shown in Figure 8a provides further simulation parameters. As modulation schemes QPSK (as abbreviation for Quadrature Phase Shift Keying) and 16QAM (as abbreviation for Quadrature Amplitude Modulation) are considered. The number $M_T$ of transmit signal streams or data signals detected was 4 or 8, a similar number of receive antennas was considered. I.i.d complex Gaussian distributed random variables have been used as channel entries. Furthermore, it was assumed that the channel is perfectly known at the receiver. As detection algorithms aside from the above embodiments, full $M_T \times M_R$ APP and ZF $M_T \times M_R$ per-antenna were considered.

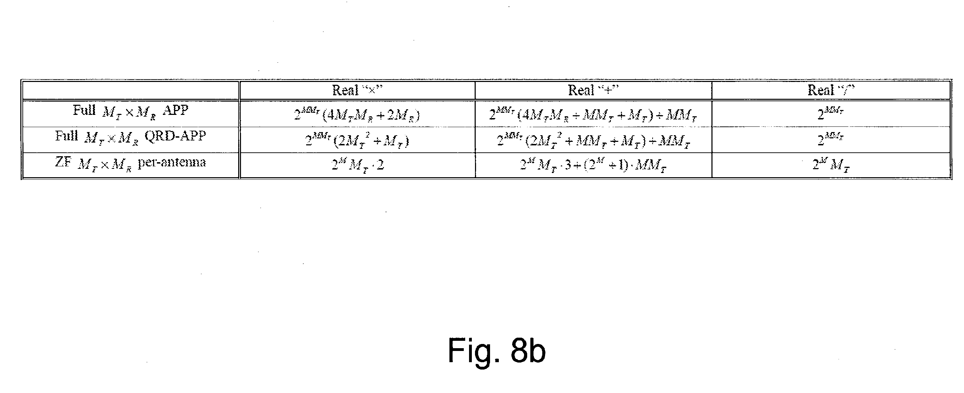

Additionally, the computational requirements for the respective algorithms were considered. Figure 8b shows a table summarizing the computational complexities, i.e. it illustrates a comparison of embodiments considering computational complexity in terms of real multiplications, additions and divisions. The complexity is quantified in terms of real additions, multiplications and divisions during the simulation. For the full $M_T \times M_R$ APP and full $M_T \times M_R$ QRD-APP algorithms, simplifications, such as Jacobian logarithm and Max-log approximation are taken into account, cf. Hochwald, B.M. et al. Notice that the QR decomposition yields a triangular matrix with real entries on the diagonal of matrix **R**, which provides a certain simplification is compared to the full APP algorithm. Compared to the hypothesis enumerations of the LLR soft output computations itself, the computational requirement of the QR decomposition is assumed to be negligible.

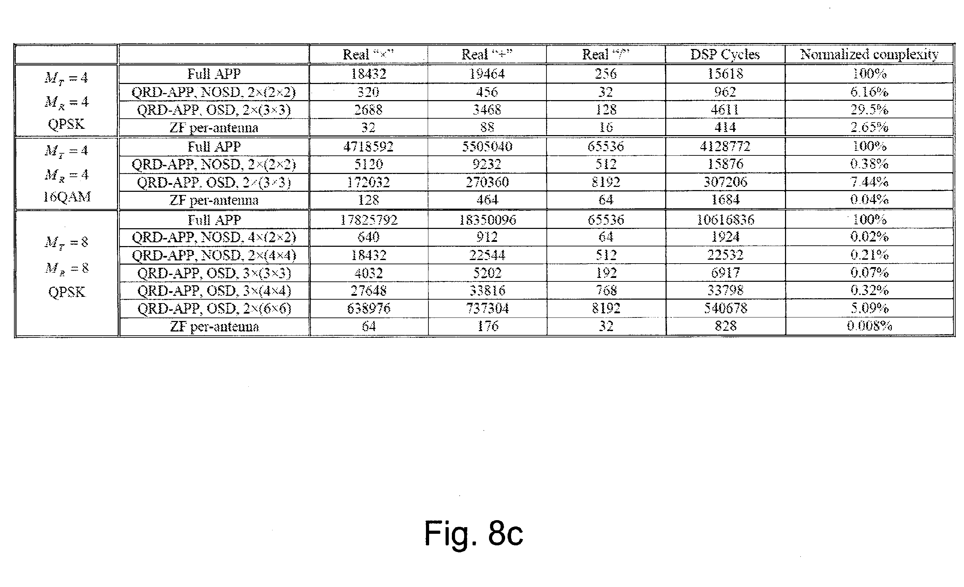

In Figures 3 and 4 the uncoded BER and achievable rates are presented for a $4 \times 4$ MIMO system. Notice that the APP performance bound can be approached by the embodiment using OSD 2x(3x3) very closely, both for QPSK and 16QAM. It is well known that the diversity order of ZF and full APP are 1 and $M_R$, respectively, if $M_T = M_R$ holds. As being a "hybrid approach", embodiments using the OSD algorithm may improve the diversity order compared to ZF. Figure 8c illustrates a performance comparison of embodiments considering normalized computational complexity. Figure 8c shows that the normalized complexity of OSD 2x(3x3) is approximately 29.5% and 7.44% of that of full APP with QPSK and 16QAM, respectively. Furthermore, considering a code rate 3/4, the gaps to the APP reference performance are 1.0dB and 0.9dB for QPSK and 16QAM, respectively, cf. Figure 4. This indicates that the embodiments using the OSD algorithm achieve a good trade-off between performance and complexity for higher order modulation schemes.

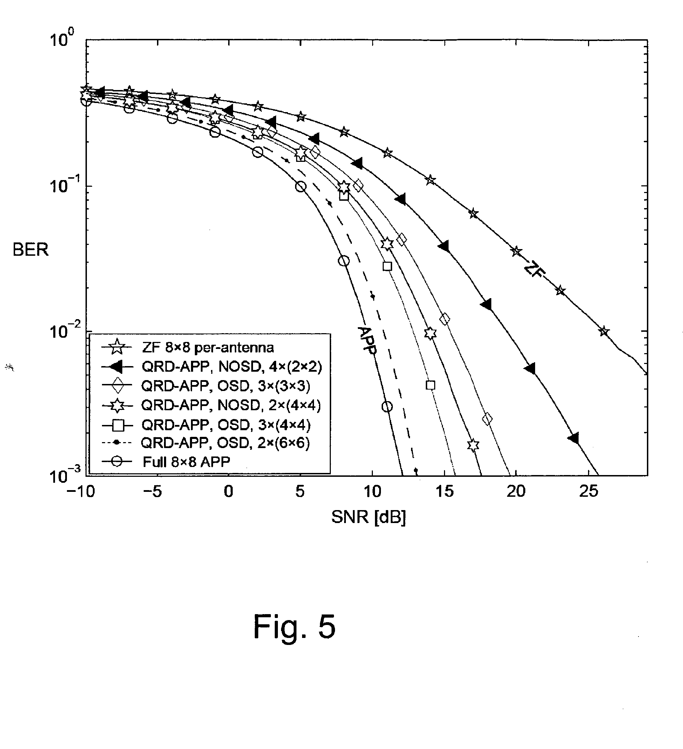

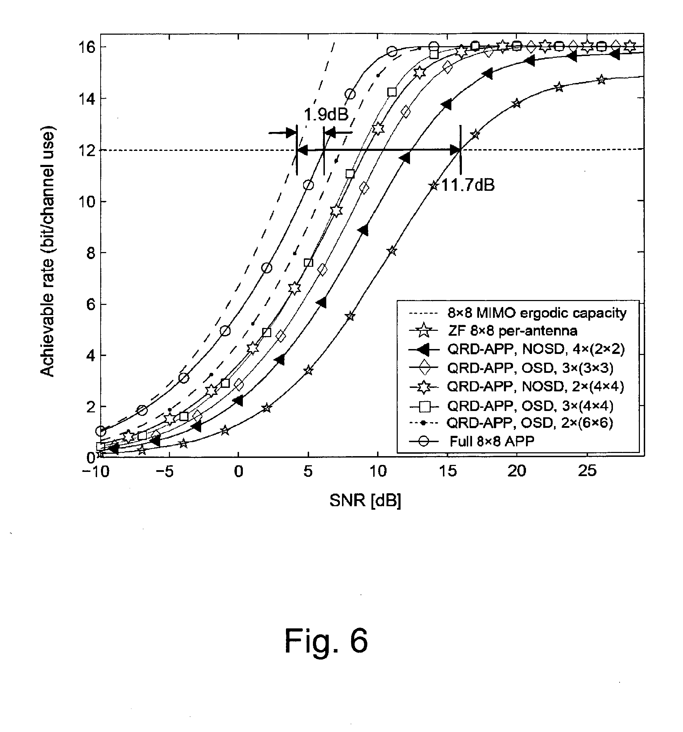

Similarly, in Figures 5 and 6, the uncoded BER and achievable rates are studied for QPSK in an $8 \times 8$ MIMO system. Due to the higher number of transmit antennas, there are more degrees of freedom for embodiments to deploy OSD and NOSD algorithms. It can be observed that the OSD 3x (4x4) and OSD 2x (6x6) schemes deliver satisfactory results, with computational requirements approximately 0.32% and 5.09% of that of full APP detection. The corresponding gaps to the APP references are 2.7dB and 1.2dB for code rate 3/4. Again, the embodiment using the OSD algorithm achieves a good trade-off between performance and complexity for MIMO systems with a large number of transmit data streams.

Embodiments may use one of the above methods for subspace detection, which may deploy QR decomposition to triangularize the effective MIMO channel matrix, allowing the creation of multiple subspace detection sets that can be individually processed by optimum APP detection. The detection of weak signal streams can be improved by appropriately choosing overlapping detection regions. Embodiments may therefore achieve a good trade-off between computational complexity and performance, with basic functional blocks being replicated as needed. For example, a $4 \times 4$ APP detection block can be used for the QRD-APP NOSD $2 \times (4 \times 4)$ as well as the QRD-APP OSD $3 \times (4 \times 4)$ algorithm, with deterministic computational requirements, amenable to hardware implementation. As an alternative to QRD, embodiments may use other matrix triangularization approaches, e.g. Cholesky decomposition, which has low computational complexity.

Embodiments may provide advantages on hardware designs. For instance, APP processing function block with g=4 is not relatively complex. The function block can be adapted to embodiments using QRD-APP NOSD $2 \times (4 \times 4)$ and QRD-APP OSD $3 \times (4 \times 4)$ algorithms. The corresponding computational requirement can be deterministic, which may be advantageous for hardware design. With the technology and silicon integration advances, MIMO systems may move more and more towards larger antenna array configurations (e.g., see AAA, as abbreviation for active antenna array).

Embodiments may provide power and cost efficient detection algorithms for such systems. Large scale MIMO is expected to be deployed within the next 2-4 years within the LTE-Advanced (as abbreviation for long term evolution). LTE-R10 already has specified MIMO systems based on 8 antennas.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention  and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof as defined by the appended claims.

Functional blocks denoted as "means for ..." (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for communicating", "means for determining", "means for providing", "means for generating", "means for calculating", "means for estimating", "means for detecting", "processors", may be provided through the use of dedicated hardware as e.g. "a transceiver", "a determiner", "a generator", "a calculator", "an estimator", "a detector", as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even  manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1.  An apparatus (100) for providing first data detection information on a first data signal of a first mobile transceiver and second data detection information on a second data signal of a second mobile transceiver, comprising
    means (110) for communicating with the first mobile transceiver for receiving a first receive signal vector from the first mobile transceiver, the first receive signal having been received from a base station transceiver by the first mobile transceiver;
    means (120) for communicating with the second mobile transceiver for receiving a second receive signal vector from the second mobile transceiver, the second receive signal having been received from the base station transceiver by the second mobile transceiver;
    means (130) for determining the data detection information on the first data signal based on the first receive signal vector and the second receive signal vector and for determining the data detection information on the second data signal based on the first receive signal vector and the second receive signal vector; and
    means (140) for providing the data detection information on the first data signal to the first mobile transceiver and for providing the data detection information on the second data signal to the second mobile transceiver.

**2.** The apparatus (100) of claim 1, wherein the means for determining (130) is adapted for determining a first estimated radio channel between the first mobile transceiver and the base station transceiver and for determining a second estimated radio channel between the second mobile transceiver and the base station transceiver, and wherein the means for determining (130) is further adapted for determining the data detection information on the first data signal and the data detection information on the second data signal based on the information on the first estimated radio channel and the information on the second estimated radio channel.

**3.** The apparatus (100) of claim 2, wherein the means (110) for communicating is further adapted for receiving information on the first estimated radio channel between the first mobile transceiver and the base station transceiver from the first mobile transceiver and wherein the means (120) for communicating is further adapted for receiving information on the second estimated radio channel between the second mobile transceiver and the base station transceiver from the second mobile transceiver.

**4.** The apparatus (100) of claim 2, wherein the first estimated radio channel refers to a multiple- input- multiple- output radio channel between a plurality of transmit antennas at the base station transceiver and a plurality of receive antennas at the first mobile transceiver, and/or wherein the information on the second estimated radio channel refers to a multiple- input- multiple- output radio channel between the plurality of transmit antennas at the base station transceiver and a plurality of receive antennas at the second mobile station transceiver.

**5.** The apparatus (100) of claim 2, wherein the first receive signal vector refers to a plurality of receive signals received at a plurality of receive antennas at the first mobile transceiver, and/or wherein the second receive signal vector refers to a plurality of receive signals received at a plurality of receive antennas at the second mobile transceiver.

**6.** The apparatus (100) of claim 5, wherein the means (130) for determining is adapted for determining the first radio channel estimate as a first radio channel matrix and the second radio channel estimate as a second radio channel matrix, wherein the means (130) for determining is further adapted for determining a radio channel matrix $H$ between the plurality of transmit antennas at the base station and the plurality of receive antennas at the first and the second mobile transceiver, the radio channel matrix $H$ having at least one channel coefficient for each combination of one of the plurality of transmit antennas at the base station transceiver and one of the plurality of receive antennas at the first and second mobile transceiver,
wherein the means (130) for determining is further adapted for determining subsets of data signals, and for determining one sub-matrix for each subset of data signals, wherein each of the data signals is comprised in at least one of the subsets,
wherein the means (130) for determining further comprises means for generating modified received signals for each subset, further comprises means for calculating data detection information for each data signal in each subset, and wherein the means (130) for determining is further adapted for determining the data detection information on the first and second data signal based on the data detection information for each data signal in each subset.

**7.** The apparatus (100) of claim 6, wherein the means for determining (130) is adapted for determining the subsets by determining quality information on the first and second data signal based on the plurality of receive signal vectors and the channel matrix $H$, a sub-matrix being based on a subset of coefficients selected from the channel matrix $H$ based on the quality information.

**8.** The apparatus (100) of claim 7, wherein a sub-matrix is a triangular matrix based on a reordering operation on the channel matrix $H$ based on the quality information and a subsequent decomposition of the channel matrix $H$.

**9.** The apparatus (100) of claim 7, wherein a sub-matrix is a sub-matrix of a triangular matrix resulting from the decomposition of the reordered channel matrix $H$ according to reordering operations, where a reordering operation is different for each subset.

**10.** The apparatus (100) of claim 8, wherein the reordering corresponds to a selection of a subset of transmit signals, the subset of transmit signals being selected based on the quality information, where in a first reordering operation transmit signals are selected among which the quality information indicates the best quality for the first data signal, and where in a second reordering operation transmit signals are selected among which the quality information indicates the best quality for the second data signal, or wherein the quality information indicates a better quality for the first data signal than for the second data signal and wherein the second data signal is selected in both reordering operations.

**11.** The apparatus (100) of claim 8, wherein the matrix decompositions correspond to a QR-decomposition or a Cholesky-decomposition and/or wherein the means for generating is adapted for generating the modified receive signals based on a result of a matrix decomposition.

**12.** The apparatus (100) of claim 11, wherein the means (140) for providing is adapted for providing a subset of the modified receive signals and at least a part of the result of the matrix decomposition to the first or second mobile transceiver as data detection information.

**13.** The apparatus (100) of claim 1, wherein the means for determining (130) is adapted for calculating reliability information or Log-Likelihood-Ratios of transmit symbols of the first and the second data signal as data detection information.

**14.** A method for providing first data detection information on a first data signal of a first mobile transceiver and second data detection information on a second data signal of a second mobile transceiver, comprising
communicating (210) with the first mobile transceiver for receiving a first receive signal vector from the first mobile transceiver, the first receive signal being received from a base station transceiver by the first mobile transceiver;
communicating (220) with the second mobile transceiver for receiving a second receive signal vector from the second transceiver, the second receive signal being received from the base station transceiver by the second mobile transceiver;
determining (230) the data detection information on the first data signal based on the first receive signal vector and the second receive signal vector and for determining the data detection information on the second data signal based on the first receive signal vector and the second receive signal vector;
providing (240) the data detection information on the first data signal to the first mobile transceiver; and
providing (250) the data detection information on the second data signal to the second mobile transceiver.

**15.** A computer program having a program code for performing the method of claim 14 when the computer program is executed on a computer or processor.

**Patentansprüche**

**1.** Vorrichtung (100) zum Bereitstellen von ersten Datendetektionsinformationen auf einem ersten Datensignal eines ersten mobilen Transceivers, und von zweiten Datendetektionsinformationen auf einem zweiten Datensignal eines zweiten mobilen Transceivers, umfassend:

Mittel (110) zum Kommunizieren mit dem ersten mobilen Transceiver zum Empfangen eines ersten Empfangssignalvektors von dem ersten mobilen Transceiver, wobei das erste Empfangssignal von einem Basisstations-Transceiver an dem ersten mobilen Transceiver empfangen wurde;
Mittel (120) zum Kommunizieren mit dem zweiten mobilen Transceiver zum Empfangen eines zweiten Empfangssignalvektors von dem zweiten mobilen Transceiver, wobei das zweite Empfangssignal von dem Basisstations-Transceiver an dem zweiten mobilen Transcelver empfangen wurde;
Mittel (130) zum Ermitteln der Datendetektionsinformationen auf dem ersten Datensignal auf der Basis des ersten Empfangssignalvektors und des zweiten Empfangssignalvektors,
und zum Ermitteln der Datendetektionsinformationen auf dem zweiten Datensignal auf der Basis des ersten Empfangssignalvektors und des zweiten Empfangssignalvektors; und
Mittel (140) zum Bereitstellen der Datendetektionsinformationen auf dem ersten Datensignal an den ersten mobilen Transceiver, und zum Bereitstellen der Datendetektionsinformationen auf dem zweiten Datensignal an den zweiten mobilen Transceiver.

**2.** Vorrichtung (100) nach Anspruch 1, wobei das Mittel zum Ermitteln (130) für das Ermitteln eines ersten geschätzten Funkkanals zwischen dem ersten mobilen Transceiver und dem Basisstations-Transceiver und für das Ermitteln eines zweiten geschätzten Funkkanals zwischen dem zweiten mobilen Transceiver und dem Besisstations-Transceiver ausgelegt ist, und wobei das Mittel zum Ermitteln (130) weiterhin für das Ermitteln der Datendetektionsinformationen auf dem ersten Datensignal und der Datendetektionsinformationen auf dem zweiten Datensignal auf der Basis der Informationen auf dem ersten geschätzten Funkkanal und der Informationen auf dem zweiten geschätzten Funkkanal ausgelegt ist.

**3.** Vorrichtung (100) nach Anspruch 2, wobei das Mittel (110) zum Kommunizieren weiterhin für den Empfang von Informationen auf dem ersten geschätzten Funkkanal zwischen dem ersten mobilen Transceiver und dem Basisstations-Transceiver von dem ersten mobilen Transceiver ausgelegt ist, und wobei das Mittel (120) zum Kommunizieren weiterhin für den Empfang von informationen auf dem zweiten geschätzten Funkkanal zwischen dem zweiten mobilen Transceiver und dem Basisstations-Transceiver von dem zweiten mobilen Transceiver ausgelegt ist.

4. Vorrichtung (100) nach Anspruch 2, wobei sich der erste geschätzte Funkkanal auf einen Mehrfacheingangs-/Mehrfachausgangs-Funkkanal zwischen einer Vielzahl von Sendeantennen an dem Basisstations-Transceiver und einer Vielzahl von Sendeantennen an dem ersten mobilen Transceiver bezieht, und/oder wobei sich die informationen auf dem zweiten geschätzten Funkkanal auf einen Mehrfacheingangs-/Mehrfachausgangs-Funkkanal zwischen einer Vielzahl von Sendeantennen an dem Basisstations-Transceiver und einer Vielzahl von Sendeantennen an dem zweiten mobilen Transceiver beziehen.

5. Vorrichtung (100) nach Anspruch 2, wobei sich der erste Empfangssignalvektor auf eine Vielzahl von an einer Vielzahl von Empfangsantennen an dem ersten mobilen Transceiver empfangenen Signalen bezieht, und/oder wobei sich der zweite Empfangssignalvektor auf eine Vielzahl von an einer Vielzahl von Empfangsantennen an dem zweiten mobilen Transceiver empfangenen Signalen bezieht.

6. Vorrichtung (100) nach Anspruch 5, wobei das Mittel (130) zum Ermitteln für das Ermitteln der Schätzung des ersten Funkkanals als eine erste Funkkanalmatrix und der Schätzung des zweiten Funkkanals als eine zweite Funkkanalmatrix ausgelegt ist, wobei das Mittel (130) zum Ermitteln weiterhin für das Ermitteln einer Funkkanalmatrix H zwischen der Vielzahl von Sendeantennen an der Basisstation und der Vielzahl von Empfangsantennen an dem ersten und an dem zweiten mobilen Transceiver ausgelegt ist, wobei die Funkkanalmatrix H mindestens einen Kanalkoeffizienten für jede Kombination einer der Vielzahl von Sendeantennen an dem Basisstations-Transceiver und einer der Vielzahl von Empfangsantennen an dem ersten und an dem zweiten mobilen Transceiver aufweist, wobei das Mittel (130) zum Ermitteln weiterhin für das Ermitteln von Teilmengen von Datensignalen und für das Ermitteln einer Teilmatrix für jede Teilmenge von Datensignalen ausgelegt ist, wobei ein jedes der Datensignale in mindestens einer der Teilmengen enthalten ist, wobei das Mittel (130) zum Ermitteln weiterhin Mittel zum Erzeugen von modifizierten empfangenen Signalen für jede Teilmenge und weiterhin Mittel zum Berechnen von Datendetektionsinformationen für jedes Datensignal In jeder Teilmenge umfasst, und wobei das Mittel (130) zum Ermitteln weiterhin für das Ermitteln der Datendetektionsinformationen auf dem ersten und auf dem zweiten Datensignal auf der Basis der Datendetektionsinformationen für jedes Datensignal in jeder Teilmenge ausgelegt ist.

7. Vorrichtung (100) nach Anspruch 6, wobei das Mittel zum Ermitteln (130) für das Ermitteln der Teilmengen durch Ermitteln von Qualitätsinformationen auf dem ersten und auf dem zweiten Datensignal auf der Basis der Vielzahl von Empfangssignalvektoren und der Kanalmatrix H ausgelegt Ist, wobei eine Teilmatrix auf einer Teilmenge von aus der Kanalmatrix H auf der Basis der Qualitätsinformationen ausgewählten Koeffizienten basiert.

8. Vorrichtung (100) nach Anspruch 7, wobei eine Teilmatrix eine auf einem Neuordnungsvorgang auf der Kanalmatrix H auf der Basis der Qualitätsinformationen und einer anschließenden Zerlegung der Kanalmatrix H basierende Dreiecksmatrix ist.

9. Vorrichtung (100) nach Anspruch 7, wobei eine Teilmatrix eine sich aus der Zerlegung der neu geordneten Kanalmatrix H gemäß dem Neuordnungsvorgang ergebende Dreiecksmatrix Ist, wobei ein Neuordnungsvorgang für jede Teilmenge unterschiedlich ist.

10. Vorrichtung (100) nach Anspruch 8, wobei das Neuordnen einer Auswahl einer Teilmenge von Sendesignalen entspricht, wobei die Teilmenge von Sendesignalen auf der Basis der Qualitätsinformationen ausgewählt wird, wobei in einem ersten Neuordnungsvorgang Sendesignale ausgewählt werden, bei welchen die Qualitätsinformationen die beste Qualität für das erste Datensignal angeben, und wobei in einem zweiten Neuordnungsvorgang Sendesignale ausgewählt werden, bei welchen die Qualitätsinformationen die beste Qualität für das zweite Datensignal angeben, oder wobei die Qualitätsinformationen eine bessere Qualität für das erste Datensignal als für das zweite Datensignal angeben, und wobei das zweite Datensignal in beiden Neuordnungsvorgängen ausgewählt wird.

11. Vorrichtung (100) nach Anspruch 8, wobei die Matrlxzerlegungen einer QR-Zerlegung oder einer Cholesky-Zerlegung entsprechen, und wobei das Mittel zum Erzeugen für das Erzeugen der modifizierten Empfangssignale auf der Basis eines Ergebnisses einer Matrixzerlegung ausgelegt ist.

**12.** Vorrichtung (100) nach Anspruch 11, wobei das Mittel (140) zum Bereitstellen für das Bereitstellen einer Teilmenge der modifizierten Empfangssignale und mindestens eines Teils des Ergebnisses der Matrixzerlegung als Datendetektionsinformationen an den ersten oder den zweiten Transceiver ausgelegt ist.

**13.** Vorrichtung (100) nach Anspruch 1, wobei das Mittel (130) zum Ermitteln für das Berechnen von Zuverlässigkeitsinformationen oder logarithmischen Wahrscheinlichkeitsverhältnissen von Sendesymbolen des ersten und des zweiten Datensignals als Datendetektionsinformationen ausgelegt ist.

**14.** Verfahren zum Bereitstellen von ersten Datendetektionsinformationen auf einem ersten Datensignal eines ersten mobilen Transceivers, und von zweiten Datendetektionsinformationen auf einem zweiten Datensignal eines zweiten mobilen Transceivers, umfassend:

Kommunizieren (210) mit dem ersten mobilen Transceiver zum Empfangen eines ersten Empfangssignalvektors von dem ersten mobilen Transceiver, wobei das erste Empfangssignal von einem Basisstations-Transceiver an dem ersten mobilen Transceiver empfangen wird;
Kommunizieren (220) mit dem zweiten mobilen Transcelver zum Empfangen eines zweiten Empfangssignalvektors von dem zweiten mobilen Transceiver, wobei das zweite Empfangssignal von dem Basisstations-Transceiver an dem zweiten mobilen Transceiver empfangen wird;
Ermitteln (230) der Datendetektionsinformationen auf dem ersten Datensignal auf der Basis des ersten Empfangssignalvektors und des zweiten Empfangssignalvektors, und Ermitteln der Datendetektionsinformationen auf dem zweiten Datensignal auf der Basis des ersten Empfangssignalvektors und des zweiten Empfangssignalvektors;
Bereitstellen (240) der Datendetektionsinformationen auf dem ersten Datensignal an den ersten mobilen Transceiver, und
Bereitstellen (250) der Datendetektionsinformationen auf dem zweiten Datensignal an den zweiten mobilen Transcelver.

**15.** Computerprogramm mit einem Programmcode zum Durchführen des Verfahrens gemäß Anspruch 14, wenn das Computerprogramm auf einem Computer oder auf einem Prozessor ausgeführt wird.

**Revendications**

**1.** Appareil (100) pour délivrer une première information de détection de données sur un premier signal de données d'un premier émetteur/récepteur mobile et une deuxième information de détection de données sur un deuxième signal de données d'un deuxième émetteur/récepteur mobile, comprenant
des moyens (110) pour communiquer avec le premier émetteur/récepteur mobile pour recevoir un premier vecteur de signal de réception de la part du premier émetteur/récepteur mobile, le premier signal de réception ayant été reçu par le premier émetteur/récepteur mobile de la part d'un émetteur/récepteur de station de base ;
des moyens (120) pour communiquer avec le deuxième émetteur/récepteur mobile pour recevoir un deuxième vecteur de signal de réception de la part du deuxième émetteur/récepteur mobile, le deuxième signal de réception ayant été reçu par le deuxième émetteur/récepteur mobile de la part de l'émetteur/récepteur de station de base ;
des moyens (130) pour déterminer l'information de détection de données sur le premier signal de données en se basant sur le premier vecteur de signal de réception et le deuxième vecteur de signal de réception et pour déterminer l'information de détection de données sur le deuxième signal de données en se basant sur le premier vecteur de signal de réception et le deuxième vecteur de signal de réception ; et
des moyens (140) pour délivrer l'information de détection de données sur le premier signal de données au premier émetteur/récepteur mobile et pour délivrer l'information de détection de données sur le deuxième signal de données au deuxième émetteur/récepteur mobile.

**2.** Appareil (100) selon la revendication 1, avec lequel les moyens de détermination (130) sont adaptés pour déterminer un premier canal radio estimé entre le premier émetteur/récepteur mobile et l'émetteur/récepteur de station de base et pour déterminer un deuxième canal radio estimé entre le deuxième émetteur/récepteur mobile et l'émetteur/récepteur de station de base, et avec lequel les moyens de détermination (130) sont en outre adaptés pour déterminer l'information de détection de données sur le  premier signal de données et l'information de détection de données sur le deuxième signal de données en se basant sur l'information sur le premier canal radio estimé et sur l'information sur le deuxième canal radio estimé.

**3.** Appareil (100) selon la revendication 2, avec lequel les moyens de communication (110) sont en outre adaptés pour recevoir l'information sur le premier canal radio estimé entre le premier émetteur/récepteur mobile et l'émetteur/récepteur de station de base de la part du premier émetteur/récepteur mobile et avec lequel les moyens de communication (120) sont en outre adaptés pour recevoir l'information sur le deuxième canal radio estimé entre le deuxième émetteur/récepteur mobile et l'émetteur/récepteur de station de base de la part du deuxième émetteur/récepteur mobile.

**4.** Appareil (100) selon la revendication 2, avec lequel le premier canal radio estimé se réfère à un canal radio d'entrée multiple/sortie multiple entre une pluralité d'antennes d'émission sur l'émetteur/récepteur de station de base et une pluralité d'antennes de réception sur le premier émetteur/récepteur mobile, et/ou avec lequel l'information sur le deuxième canal radio estimé se réfère à un canal radio d'entrée multiple/sortie multiple entre la pluralité d'antennes d'émission sur l'émetteur/récepteur de station de base et une pluralité d'antennes de réception sur le deuxième émetteur/récepteur de station mobile.

**5.** Appareil (100) selon la revendication 2, avec lequel le premier vecteur de signal reçu se réfère à une pluralité de signaux de réception reçus sur une pluralité d'antennes de réception sur le premier émetteur/récepteur mobile, et/ou avec lequel le deuxième vecteur de signal reçu se réfère à une pluralité de signaux de réception reçus sur une pluralité d'antennes de réception sur le deuxième émetteur/récepteur mobile.

**6.** Appareil (100) selon la revendication 5, avec lequel les moyens de détermination (130) sont adaptés pour déterminer le premier canal radio estimé en tant que première matrice de canal radio et le deuxième canal radio estimé en tant que deuxième matrice de canal radio, avec lequel les moyens de détermination (130) sont en outre adaptés pour déterminer une matrice de canal radio H entre la pluralité d'antennes d'émission sur la station de base et la pluralité d'antennes de réception sur le premier et le deuxième émetteurs/récepteurs mobiles, la matrice de canal radio H comprenant au moins un coefficient de canal pour chaque combinaison de l'une de la pluralité d'antennes d'émission sur la station de base et de l'une de la pluralité d'antennes de réception sur le premier et le deuxième émetteurs/récepteurs mobiles,
avec lequel les moyens de détermination (130) sont en outre adaptés pour déterminer des sous-ensembles de signaux de données et pour déterminer une sous-matrice pour chaque sous-ensemble de signaux de données, avec lequel chacun des signaux de données est compris dans au moins l'un des sous-ensembles,
avec lequel les moyens de détermination (130) comprennent en outre des moyens pour générer des signaux reçus modifiés pour chaque sous-ensemble, comprennent en outre des moyens pour calculer l'information de détection de données pour chaque signal de données dans chaque sous-ensemble, et avec lequel les moyens de détermination (130) sont en outre adaptés pour déterminer l'information de détection de données sur le premier et le deuxième signal de données en se basant sur l'information de détection de données pour chaque signal de données dans chaque sous-ensemble.

**7.** Appareil (100) selon la revendication 6, avec lequel les moyens de détermination (130) sont adaptés pour déterminer les sous-ensembles en déterminant l'information de qualité sur le premier et le deuxième signal de données en se basant sur la pluralité de vecteurs de signal de réception et la matrice de canal H, une sous-matrice étant basée sur un sous-ensemble de coefficients choisis à partir de la matrice de canal H en se basant sur l'information de qualité.

**8.** Appareil (100) selon la revendication 7, avec lequel une sous-matrice est une matrice triangulaire basée sur une opération de réorganisation sur la matrice de canal H en se basant sur l'information de qualité et ensuite une décomposition de la matrice de canal H.

**9.** Appareil (100) selon la revendication 7, avec lequel une sous-matrice est une sous-matrice d'une matrice triangulaire résultant de la décomposition de la matrice de canal H réorganisée conformément aux opérations de réorganisation, une opération de réorganisation étant ici différente pour chaque sous-ensemble.

**10.** Appareil (100) selon la revendication 8, avec lequel la réorganisation correspond à une sélection d'un sous-ensemble de signaux d'émission, le sous-ensemble de signaux d'émission étant choisi en se basant sur l'information de qualité, les signaux d'émission parmi lesquels l'information de qualité indique la meilleure qualité pour le premier signal de données étant sélectionnée au cours d'une première opération de réorganisation, et les signaux d'émission parmi lesquels l'information de qualité indique la meilleure qualité pour le deuxième signal de données étant sélectionnés au cours d'une deuxième opération de réorganisation, ou avec lequel l'information de qualité indique une meilleure qualité pour le premier signai de données que pour le deuxième signal de données et avec lequel le deuxième signal de données et sélectionné dans les deux opérations de réorganisation.

**11.** Appareil (100) selon la revendication 8, avec lequel les décompositions de la matrice correspondent à une décomposition QR ou une décomposition de Cholesky et/ou avec lequel les moyens pour générer sont adaptés pour générer les signaux reçus modifiés en se basant sur un résultat d'une décomposition de la matrice.

**12.** Appareil (100) selon la revendication 11, avec lequel les moyens (140) pour délivrer sont adaptés pour délivrer un sous-ensemble des signaux de réception modifiés et au moins une partie du résultat de la décomposition de la matrice au premier et au deuxième émetteur/récepteur mobile sous la forme d'une information de détection de données.

**13.** Appareil (100) selon la revendication 1, avec lequel les moyens de détermination (130) sont adaptés pour calculer l'information de fiabilité ou les logarithmes du rapport de vraisemblance des symboles d'émission du premier et du deuxième signal de données sous la forme d'une information de détection de données.

**14.** Procédé pour délivrer une première information de détection de données sur un premier signal de données d'un premier émetteur/récepteur mobile et une deuxième information de détection de données sur un deuxième signal de données d'un deuxième émetteur/récepteur mobile, comprenant

communication (210) avec le premier émetteur/récepteur mobile pour recevoir un premier vecteur de signal de réception de la part du premier émetteur/récepteur mobile, le premier signal de réception ayant été reçu par le premier émetteur/récepteur mobile de la part d'un émetteur/récepteur de station de base ;

communication (220) avec le deuxième émetteur/récepteur mobile pour recevoir un deuxième vecteur de signal de réception de la part du deuxième émetteur/récepteur, le deuxième signal de réception ayant été reçu par le deuxième émetteur/récepteur mobile de la part de l'émetteur/récepteur de station de base ;

détermination (230) de l'information de détection de données sur le premier signal de données en se basant sur le premier vecteur de signal de réception et le deuxième vecteur de signal de réception et détermination de l'information de détection de données sur le deuxième signal de données en se basant sur le premier vecteur de signal de réception et le deuxième vecteur de signal de réception ;

délivrance (240) de l'information de détection de données sur le premier signal de données au premier émetteur/récepteur mobile ; et

délivrance (250) de l'information de détection de données sur le deuxième signal de données au deuxième émetteur/récepteur mobile.

**15.** Programme informatique comprenant un code de programme pour mettre en oeuvre le procédé selon la revendication 14 lorsque le programme informatique est exécuté sur un ordinateur ou un processeur.

Figure 1a

Figure 1b

Fig. 1c

$x \in (A{-}B) \cap (A{-}C)$

$z \in A{\cap}B{\cap}C$

$y_1 \in (A{\cap}B) - (A{\cap}C)$

$y_2 \in (A{\cap}C) - (A{\cap}B)$

$A$

$B$

$C$

# Fig. 2

Fig. 3

Fig. 4

Fig. 5

Fig. 6

1. Create $M_s$ subsets of signal streams, by pairing the streams with strong and weak $\mu_k$ together, and $g_m$ denotes the number of streams in the $m$-th subset.

2. FOR $m = 1$ TO $M_s$

3. Reorder the $M_R \times M_T$ channel matrix as
$$\tilde{\mathbf{H}} = \begin{bmatrix} \mathbf{H}_1 & \cdots & \mathbf{H}_{m-1} & \mathbf{H}_{m+1} & \cdots & \mathbf{H}_{M_s} & \mathbf{H}_m \end{bmatrix}.$$

4. QR decomposition $\tilde{\mathbf{H}} = \mathbf{Q}_m \mathbf{R}_m$ and $\mathbf{y}_{QR,m} = \mathbf{Q}_m^H \mathbf{y} = \mathbf{R}_m \mathbf{s}_m + \mathbf{n}_{QR,m}$.

5. Create the $g_m$ streams corresponding MIMO system as
$$
\begin{bmatrix} y_{QR,m}^{(M_T-g_m+1)} \\ \vdots \\ y_{QR,m}^{(M_T)} \end{bmatrix}
=
\begin{bmatrix}
R_m^{(M_T-g_m+1,M_T-g_m+1)} & \cdots & R_m^{(M_T-g_m+1,M_T-1)} & R_m^{(M_T-g_m+1,M_T)} \\
0 & \ddots & \vdots & \vdots \\
\vdots & \ddots & R_m^{(M_T-1,M_T-1)} & R_m^{(M_T-1,M_T)} \\
0 & \cdots & 0 & R_m^{(M_T,M_T)}
\end{bmatrix}
$$
$$
\times
\begin{bmatrix} s_m^{(M_T-g_m+1)} \\ \vdots \\ s_m^{(M_T)} \end{bmatrix}
+
\begin{bmatrix} n_{QR,m}^{(M_T-g_m+1)} \\ \vdots \\ n_{QR,m}^{(M_T)} \end{bmatrix}
$$
or alternatively $\mathbf{y}_{QR,m}^{(g_m)} = \mathbf{R}_m^{(g_m)} \mathbf{s}_m^{(g_m)} + \mathbf{n}_{QR,m}^{(g_m)}$.

6. LLR computation with respect to APP detection
$$
\text{LLR}\left[ y_{QR,m}^{(g_m)} \right]_k^{(j)} = \log\left( \sum_{\mathbf{a}:[\mathbf{a}]_k \in B_{j,k}^1} \exp\left(-\left\| \mathbf{y}_{QR,m}^{(g_m)} - \mathbf{R}_m^{(g_m)} \mathbf{a} \right\|^2 / \sigma^2 \right) \right)
$$
$$
- \log\left( \sum_{\mathbf{a}:[\mathbf{a}]_k \in B_{j,k}^0} \exp\left(-\left\| \mathbf{y}_{QR,m}^{(g_m)} - \mathbf{R}_m^{(g_m)} \mathbf{a} \right\|^2 / \sigma^2 \right) \right),
$$

7. END FOR

8. Detect the $j$-th bit of $k$-th receive signal stream with
$$
\text{LLR}_k^{(j)} = \sum_{m=1}^{m_s^{(k)}} \text{LLR}\left[ y_{QR,m}^{(g_m)} \right]_k^{(j)} \tag{17}
$$
where $m_s^{(k)}$ stands for the number of independent APP detection for the $k$-th signal stream, and $1 \leq m_s^{(k)} \leq M_s$.

# Fig. 7a

The apparatus picks out $L$ users to establish a $M_T \times M_R$ MIMO system. 702

Each user estimates the $M_T \times M_{R_i}$ channel matrix and reports the apparatus, as well as their receive signal vector $y_i$. 704

The apparatus create $M$ subsets for all signal streams. There're $g_m$ streams available in $m$-th subset, see Figure 7a, 1. step 706

Define the counter $C = 1$. 708

While $C \leq M$ 710

A —— The apparatus deploys QR decomposition for $m$-th detection subset, regarding the reordered channel matrix, see Figure 7a, 3. and 4. step 712

C —— The apparatus deploys APP detection for $m$-th detection subset, see Figure 7a, 5.-7. step 714

The apparatus delivers the Log-Likelihood Ratio (LLR) of the streams in $m$-th detection subset to corresponding user. 716

B —— Let $C = C + 1$. 718

The $L$ users collect the LLR of their signal stream in a distributed manner, combine them and decode the signal. 720

# Fig. 7b

(A) ⟶ If the streams of $i$-th user completely belongs to $m$-th subset? ⟶ **No** ⟶ (C)

730

**Yes** ↓

If the $i$-th user is capable of APP detection? ⟶ **No** ⟶ (C)

732

**Yes** ↓

The apparatus delivers the triangularized channel matrix **R** to $i$-th user, as well as the processed receive signal vector.

734

↓

The $i$-th user deploys APP detection for $m$-th detection subset, see Figure 7a, see steps 5-7

736

↓

(B) ⟵ The $i$-th user delivers the LLR of the streams of other users to the apparatus.

738

# Fig. 7c

| Modulation scheme | QPSK, 16QAM |
|---|---|
| Number of transmit signal streams $M_T$ | 4 or 8 |
| Number of receive antennas $M_R$ | 4 or 8 |
| Channel entries | i.i.d. complex Gaussian random variables |
| Channel knowledge at receiver | Perfectly known |
| Detection algorithms | 1. Full $M_T \times M_R$ APP;<br>2. ZF $M_T \times M_R$ per-antenna;<br>3. Subspace detection with $M_s \times (g \times g)$ |

# Fig. 8a

| | Real "×" | Real "+" | Real "/" |
|---|---|---|---|
| Full $M_T \times M_R$ APP | $2^{MM_T}(4M_T M_R + 2M_R)$ | $2^{MM_T}(4M_T M_R + MM_T + M_T) + MM_T$ | $2^{MM_T}$ |
| Full $M_T \times M_R$ QRD-APP | $2^{MM_T}(2M_T^2 + M_T)$ | $2^{MM_T}(2M_T^2 + MM_T + M_T) + MM_T$ | $2^{MM_T}$ |
| ZF $M_T \times M_R$ per-antenna | $2^M M_T \cdot 2$ | $2^M M_T \cdot 3 + (2^M + 1) \cdot MM_T$ | $2^M M_T$ |

# Fig. 8b

EP 2 501 055 B1

| | | Real "×" | Real "+" | Real "/" | DSP Cycles | Normalized complexity |
|---|---|---|---|---|---|---|
| $M_T = 4$ $M_R = 4$ QPSK | Full APP | 18432 | 19464 | 256 | 15618 | 100% |
| | QRD-APP, NOSD, 2×(2×2) | 320 | 456 | 32 | 962 | 6.16% |
| | QRD-APP, OSD, 2×(3×3) | 2688 | 3468 | 128 | 4611 | 29.5% |
| | ZF per-antenna | 32 | 88 | 16 | 414 | 2.65% |
| $M_T = 4$ $M_R = 4$ 16QAM | Full APP | 4718592 | 5505040 | 65536 | 4128772 | 100% |
| | QRD-APP, NOSD, 2×(2×2) | 5120 | 9232 | 512 | 15876 | 0.38% |
| | QRD-APP, OSD, 2×(3×3) | 172032 | 270360 | 8192 | 307206 | 7.44% |
| | ZF per-antenna | 128 | 464 | 64 | 1684 | 0.04% |
| $M_T = 8$ $M_R = 8$ QPSK | Full APP | 17825792 | 18350096 | 65536 | 10616836 | 100% |
| | QRD-APP, NOSD, 4×(2×2) | 640 | 912 | 64 | 1924 | 0.02% |
| | QRD-APP, NOSD, 2×(4×4) | 18432 | 22544 | 512 | 22532 | 0.21% |
| | QRD-APP, OSD, 3×(3×3) | 4032 | 5202 | 192 | 6917 | 0.07% |
| | QRD-APP, OSD, 3×(4×4) | 27648 | 33816 | 768 | 33798 | 0.32% |
| | QRD-APP, OSD, 2×(6×6) | 638976 | 737304 | 8192 | 540678 | 5.09% |
| | ZF per-antenna | 64 | 176 | 32 | 828 | 0.008% |

# Fig. 8c

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20040266339 A1
- WO 2006088400 A1
- US 20090323545 A
- US 20090323840 A

### Non-patent literature cited in the description

- **FOSCHINI, G. J. ; GANS, M. J.** On limits of wireless comunications in a fading environment when using multiple antennas. *Wireless Personal Communications,* March 1998, vol. 6 (3), 311-335
- **TELATAR, I. E.** Capacity of multi-antenna Gaussian channels. *European Transactions on Telecommunications,* November 1999, vol. 10 (6), 585-595
- **ALAMOUTI, S. M.** A simple transmit diversity technique for wireless communications. *IEEE Journal on Selected Areas in Communications,* October 1998, vol. 16 (8), 1451-1458
- **BOUDREAU, G. ; PANICKER, J. ; NING GUO ; RUI CHANG ; NENG WANG ; VRZIC, S.** Interference Coordination and Cancellation for 4G Networks. *IEEE Communications Magazine,* April 2009, vol. 47 (4), 74-81
- **LARSSON, E.G.** MIMO Detection Methods: How They Work. *IEEE Signal Processing Magazine,* May 2009, vol. 26 (3), 91-95
- **WINDPASSINGER, C. ; LAMPE, L. ; FISCHER, R.F.H. ; HEHN, T.** A performance study of MIMO detectors. *IEEE Transactions on Wireless Communications,* August 2006, vol. 5 (8), 2004-2008
- **HOCHWALD, B.M. ; TEN BRINK, S.** Achieving Near-Capacity on a Multiple-Antenna Channel. *IEEE Transactions on Communications,* March 2003, vol. 51 (3), 389-399
- **FOSCHINI, G.J. ; KARAKAYALI, K. ; VALENZUELA, R.A.** Coordinating multiple antenna cellular networks to achieve enormous spectral efficiency. *IEE Proceedings Communications,* August 2006, vol. 153, 548-555
- **HUANG, H. ; TRIVELLATO, M. ; HOTTINEN, A. ; SHAFI, M. ; SMITH, P. ; VALENZUELA, R.** Increasing downlink cellular throughput with limited network MIMO coordination. *IEEE Transactions on Wireless Communications,* June 2009, vol. 8 (6), 2983-2989
- **MOHAMMED, S.K. ; ZAKI, A. ; CHOCKALINGAM, A. ; RAJAN, B.S.** High-Rate Space-Time Coded Large-MIMO Systems: Low-Complexity Detection and Channel Estimation. *IEEE Journal of Selected Topics in Signal Processing,* December 2009, vol. 3 (6), 958-974
- **MCKAY, M.R. ; COLLINGS, I.B.** Capacity and Performance of MIMO-BICM With Zero-Forcing Receivers. *IEEE Transactions on Communications,* January 2005, vol. 53 (1), 74-83
- **SEETHALER, D. ; MATZ, G. ; HLAWATSCH, F.** An Efficient MMSE-Based Demodulator for MIMO Bit-Interleaved Coded Modulation. *Proceedings of IEEE Global Telecommunications Conference 2004 (GLOBECOM'04,* November 2004, 2455-2459
- **ARIYAVISITAKUL, S.L. ; JUN ZHENG ; OJARD, E. ; JOONSUK KIM.** Subspace Beamforming for Near-Capacity MIMO Performance. *IEEE Transactions on Signal Processing,* November 2008, vol. 56 (11), 5729-5733
- **TEN BRINK, S.** Designing Iterative Decoding Schemes with the Extrinsic Information Transfer Chart. *AEÜ International Journal of Electronics and Communications,* November 2000, vol. 54 (6), 389-398